## Europäisches Patentamt

## European Patent Office

## Office européen des brevets

(19)

(11) Publication number: **0 113 160**
**B1**

(12)

# EUROPEAN PATENT SPECIFICATION

(45) Date of publication of patent specification: **15.07.87**

(51) Int. Cl.⁴: **B 65 D 3/22**, B 31 C 3/00

(21) Application number: **83304398.7**

(22) Date of filing: **29.07.83**

(54) Plastics material can.

(30) Priority: **03.12.82 JP 212519/82**
**03.12.82 JP 212520/82**
**03.12.82 JP 212521/82**
**22.05.83 JP 89861/83**

(43) Date of publication of application:
**11.07.84 Bulletin 84/28**

(45) Publication of the grant of the patent:
**15.07.87 Bulletin 87/29**

(84) Designated Contracting States:
**CH DE FR GB LI NL SE**

(56) References cited:
**FR-A-1 416 725**
**FR-A-2 071 401**
**FR-A-2 271 987**
**FR-A-2 459 724**
**LU-A- 78 291**
**NL-A-6 411 211**
**US-A-3 716 435**

(73) Proprietor: **AJINOMOTO CO., INC.**
**5-8, Kyobashi 1-chome, Chuo-ku**
**Tokyo 104 (JP)**

(72) Inventor: **Sasaki, Hitoshi**
**No. 2-89, Shinmei-cho Saiwai-ku**
**Kawasaki-shi Kanagawa-ken (JP)**
Inventor: **Igoda, Shoji**
**No. 1-18-11, Fujisaki Kawasaki-ku**
**Kawasaki-shi Kanagawa-ken (JP)**

(74) Representative: **Bond, Bentley George et al**
**Haseltine Lake & Co. 28 Southampton Buildings**
**Chancery Lane**
**London WC2A 1AT (GB)**

Courier Press, Leamington Spa, England.

# 0 113 160

**Description**

The present invention relates to a can which is suitable for containing, for example, foods and drinks, and to an apparatus for producing the same. The can is at least partially made of plastics material, and preferably is predominantly made of plastics material, and is referred to herein as a "plastics material can".

It goes without saying that containers for foods and drinks should not cause contamination of the food or drink. In addition, they must have various physical properties such as water resistance, oil resistance, the ability to be retorted for sterilization, the ability to be self-supporting, and gas barrier properties, depending upon their applications. Metal cans meet these requirements, but they have disadvantages. Thus, the environmental pollution by used cans is becoming a social problem. Also, the transporting of bulky empty metal cans from the point of production to the point of filling is a waste.

Plastics materials are being used for making various containers because of their ease of moulding and fabrication. However, plastics materials have not yet been put into practical use in the area of food and drink containers, where metal cans are dominant, because the plastics materials must not only have the aforesaid properties but must also be low in cost.

Heretofore, the technology for producing the body of a plastics material can from a material composed mainly of plastics material has not been developed, because plastics materials have a problem in their physical properties, particularly a problem involved in heat treatment. The present inventors have found that, for this problem to be solved in the case of a plastics material can having a structure wherein the can body consists of a contents-protecting layer and an external supporting layer, the tubular part of the contents-protecting layer should be uniform and resistant to deformation.

As a result of continued research on this subject, the present inventors have found that the troubles are attributable mostly to deformation caused by heat shrinkage of plastics materials and to air bubbles entrapped in plastics materials. The present inventors have further found a means to solve these problems.

In US—A—3716435, there is disclosed a tubular spirally-wound multi-ply body of a container suitable for fluids. However, this body is made mainly of fibre stock.

The present invention provides a can having a body member comprising (a) an inner contents- protecting layer forming a tubular body having a spiral seam and (b) an outer supporting layer, the surface of said outer supporting layer having been subjected to a smoothing treatment, as it is known from US—A—3 716 435 and is characterised in that said tubular body is wholly or mainly made of plastics material and its spiral seam includes a folded part formed by folding back and outward onto an outer surface of said contents protecting layer one side edge of a strip of laminated film, bonding the folded part by preventing air bubbles from being entrapped thereunder, overlapping the other side edge of the same laminated film on the folded surface, and bonding said side edges by preventing air bubbles from being entrapped between said side edges; and in that said outer supporting layer is a supporting plastics layer covering said outer surface of said contents-protecting layer, wherein said supporting plastics layer comprises a coated plastics layer having a thickness and composition sufficient to impart ridigity to the tubular body.

The present invention also provides an apparatus for forming the body member of a can of the invention, which apparatus comprises:

means for folding one side edge of a laminated film outwardly and back upon itself, said means comprising width regulating members which regulate the width of the laminated film payed out from a roll when passing between the width regulating members and which consequently cause said one side edge of the laminated film to fold, and confining members serving to cause said folded one side edge to be folded back upon the laminated film by virtue of the fact that the laminated film passes above one said confining member and below another said confining member;

means for bonding said folded one side edge to the laminated film in a manner such that air bubbles are not entrapped therebetween, said means comprising a pair of rollers between which is passed the laminated film with said folded one side edge thereof folded back upon the laminated film, and heating means for the application of heat to said folded one side edge;

means for overlapping the other side edge of the same laminated film with said folded one side edge, said means comprising a fixed mandrel around which the laminated film is spirally wound, means for causing the laminated film to rotate around the fixed mandrel, and means for bonding said other side edge to said folded one side edge in a manner such that air bubbles are not entrapped therebetween;

heating means for the application of heat to the overlap between said folded one side edge and said other side edge;

at least one means for applying molten plastics material to the tubular body; and

means for smoothing the applied molten plastics material.

The laminated film constituting the contents-protecting layer may be of different construction depending upon the intended use. If the plastics material can of this invention is to be used as a food or drink container in place of metal cans, the innermost layer which comes into contact with the food and drink is preferably made of a polyolefin such as polyethylene, polypropylene and ethylene-propylene copolymer. Preferred polyethylene is high-density polyethylene, from the standpoint of resistance to retorting. The laminated film should preferably have an intermediate layer of ethylene-vinyl alcohol copolymer or polyvinylidene chloride having gas barrier properties. An intermediate layer of aluminium

2

# 0 113 160

foil is most suitable for gas barrier properties. Also, the laminated film should have the outermost layer of plastics material which protects the intermediate layer. This layer may be made of the same polyolefin as used for the innermost layer, unless it has no specific purpose. The intermediate layer may be laminated with various materials depending upon the intended use. Moreover, an adhesive layer may be interposed between the layers, as required. A suitable adhesive is selected, depending upon the two layers to be bonded. For instance, carboxylic acid-grafted polypropylene or urethane-based adhesive is suitable for bonding a polyolefin layer to an aluminium foil. The thickness of the laminated film is determined in consideration of the thickness of the tubular body which is the body member of the plastics can of this invention. It is usually smaller than 250 μ, and preferably from 50 to 150 μ.

As can be seen, the plastics material can is characterised in that the body member includes a contents-protecting layer which is a tubular body formed by folding back outward one side edge of a laminated film, bonding the folded edge such that air bubbles are not entrapped thereunder, and overlapping the other side edge of the same laminated film on the folded surface and bonding them such that air bubbles are not entrapped between them.

Preferably the bonding of the folded edge is accomplished by fusion bonding, for example, by heating and contact bonding. Preferably the heating is accomplished by blowing hot air on a pressure roller and the contact bonding is accomplished by roller contact bonding with said pressure roller.

Preferably, the bonding of the other side edge overlapped on the folded surface is accomplished by fusion bonding. Preferably the heating means is hot air.

Preferably, the plastics material can further comprise a supporting layer outside of the contents-protecting layer. Preferably, a part of the supporting layer is an additional film. The additional film is preferably bonded over all the external surface of the laminated film, except for the projecting seam formed by the bonding of the two side edges, and the thickness of the additional film is preferably approximately equal to the height of said projecting seam. Preferably, the additional film is bonded such that air bubbles are not entrapped thereunder. The adhesive used for bonding the additional film is preferably a polyurethane. The bonding steps for bonding the additional film preferably include a roll contact bonding step.

Preferably, the tubular body of the contents-protecting layer is produced by combining the steps of folding back one side edge of the laminated film, fusion bonding the folded edge, bonding the additional sheet, and overlapping the other side edge of the same laminated film onto the folded surface and fusion bonding them. Preferably, the fusion bonding of the folded edge is accomplished by heating and contact bonding. Preferably, the bonding of the additional film is accomplished with an adhesive and by contact bonding. Preferably, the contact bonding for fusion bonding the folded part and the contact bonding for bonding the additional film are accomplished by the same contact bonding roller.

The supporting layer is preferably composed of the additional film and a surface plastics material layer which is bonded to the projecting seam of the tube and over all the external surface of the additional film. Preferably, the surface of the surface plastics material layer is subjected to a smoothing treatment. Preferably, the surface plastics material layer is formed by coating molten plastics material and the smoothing treatment is carried out after the coating.

Preferably, the smoothing treatment is accomplished by means of a smoothing belt, for example a smoothing belt which is such that at least the side which comes into contact with the surface of the surface plastics material layer is silicone-treated. Preferably, the smoothing belt is such that the side which comes into contact with the surface of the surface plastics material layer is arranged such that the side which advances to the surface to be smoothed is slightly lifted. Preferably, the smoothing treatment for the surface plastics material layer removes the projecting and depressed parts formed by the coating of the molten plastics material. Preferably, the smoothing treatment is accomplished by coating a plastics material melt so that the surface of the surface plastics material layer becomes smooth. Preferably, the smoothing treatment is accomplished by the smoothing with the smoothing belt and the subsequent coating of the plastics material melt.

The laminated film of the contents-protecting layer preferably has an extreme external layer and extreme internal layer of polyolefin, preferably polyethylene, polypropylene or ethylene-propylene copolymer, and an intermediate layer of aluminium foil. Preferably, the adhesive for bonding the layers inside the aluminium foil is carboxylic acid-grafted polypropylene.

The additional film and surface plastics material layer in the supporting layer are preferably a polyolefin, preferably polyethylene, polypropylene or ethylene-propylene copolymer.

Either or both of the additional film and the surface plastics material layer in the supporting layer are preferably incorporated with powder of an inorganic material. Preferably, the inorganic material contains at least either calcium carbonate or talc.

The tubular body of the contents-protecting layer is preferably formed by winding spirally the laminated film. The tubular body is preferably a cylinder or a prism, for example a quadrangular prism.

Preferably, the lid of the can comprises an internal wall, a top and an external wall, and has a peripheral ridge which fits onto the open end of the body member. Preferably, the height of the internal wall of the peripheral ridge is greater than 4 mm.

Preferably, the internal wall of the peripheral ridge is bonded to the internal wall of the open end of the body member. Preferably, the laminated film of the contents-protecting layer has an aluminium foil layer

3

and the bonding is accomplished by high-frequency heating. Preferably, the external wall of the peripheral ridge is heat-sealed to the external wall of the open end of the body member.

The present invention also provides an apparatus for use in producing a plastics material can, the apparatus comprising an air heater for heating said folded edge and a pressing roll for contact-bonding said folded edge.

The present invention also provides an apparatus for use in producing a plastics material can, the apparatus comprising a mechanism for overlapping the additional film over the external surface of the laminated film, except the projecting seam formed by the bonding of both side edges, the thickness of the additional film being approximately equal to the height of said projecting seam, and contact bonding rolls for contact-bonding the overlapped additional film to the laminated film. Preferably, the contact bonding rolls are such that the surface of one of the rolls is made of a rigid material and the surface of the other one of the rolls is made of a heat-resistant elastic material. Preferably, the contact bonding rolls are capable of performing the contact bonding of the folded edge simultaneously.

The present invention also provides a mandrel for use in forming the body of a plastics material can, said mandrel comprising a small diameter part at the forward end thereof and a liquid passage which supplies a liquid to the space between the laminated film or sheet formed in a tubular form and said small diameter part. Preferably, the peripheral surface of the small diameter part is provided with a spiral groove extending from the discharge port of the liquid passage.

The present invention also provides an apparatus for use in producing a plastics material can, which apparatus comprises a die for coating molten plastics material over the external surface of the tubular body, and a surface smoothing means which smoothens spiral irregularities on the surface plastics material layer on the mandrel before the surface plastics material solidifies completely. Preferably, the surface smoothing means comprises a smoothing belt which is spirally wound a proper number of times on the spiral projecting part and a drive mechanism which causes the smoothing belt to run under proper tension.

The present invention also provides an apparatus for smoothing a plastics material surface, which comprises an elastic blade that is in contact under pressure with the plastics material external surface of the supporting layer of the tubular body which has been nearly finished on the mandrel, a means to feed molten plastics onto said blade, a means to heat said blade, and a means to cause said blade to come into contact under approximately uniform pressure with said tubular body. Preferably the pressing force transmitting means is provided with a means to absorb the vibrations of the mandrel so that it transmits a uniform pressing force.

The present invention also provides an apparatus for correcting the sharp of the tubular body of the plastics material can body, which comprises a local heating means to heat the surface of the tubular body of the can body linearly in the direction of the length of the tube. Preferably, the local heating means is an infrared line heater provided with a concave reflector which focuses on the folded part.

The present invention also provides an apparatus for correcting the shape of the tubular body of the plastics material can body, which comprises a quadrangular tube forming mandrel which is inserted into the tubular body with the folded part heated and is provided with a mechanism to form the tubular body into a quadrangular tube. Preferably, the apparatus further comprises a means to press, in the form of a concave arc, the part between the folded parts of the tubular body with the folded part heated. Preferably, the apparatus further comprises, in addition to the square tube forming mandrel, local heating heaters which heat linearly the surface of the tubular body in the longitudinal direction.

The present invention also provides an apparatus for use in producing a plastics material can, the apparatus comprising a circular blade for cutting the tubular body, said circular blades having attached concentrically to one side thereof a guide having a circular external periphery slightly smaller in diameter than the blade, and a tubular body supporting member having a surface made of a soft material.

The present invention also provides an apparatus for use in producing a plastics material can, which comprises a high frequency heating means to heat the peripheral part of the lid fitted to the open end of the plastics material tubular body, a non-metallic pressing member to press the internal wall of the peripheral ridged formed on the peripheral edge of the lid, and a non-metallic pressing member to press the external wall of the peripheral ridge over the entire periphery. Preferably, the pressing member is divided into a proper number of sections and the divided sections are arranged such that they press the entire periphery of the external wall of the peripheral ridge. Preferably, the pressing member is a pressing roller which presses the external wall of the peripheral ridge.

The present invention also provides an apparatus for producing a plastics material can, which comprises an air heater to heat the inside of the external wall of the open lip fitted to the open end of the tubular body of the can body and the outside of the open end. Preferably, the apparatus further comprises an infrared line heater and a concave reflector to concentrate infrared rays on the heating part.

For a better understanding of the invention reference will now be made, by way of example, to the drawings in which:

Figure 1 is a sectional view of one example of a laminated film for use in the invention;
Figure 2 is a sectional view showing the adhesion of the side edges of the laminated film;
Fig. 3 is a perspective view showing the bonded side edges;

Fig. 4 is a sectional view showing the adhesion of the side edges of the laminated film, with an additional film laminated thereto;

Fig. 5 is a sectional view of the resulting tubular body, including a layer of plastics material containing inorganic material (coated plastics material layer) and a smoothed layer (plastics material surface layer) laminated thereon;

Fig. 6 is an enlarged sectional view of the resulting tubular body;

Fig. 7 is a plan view showing an example of a lid of a round can of the invention;

Fig. 8 is a sectional view taken along the line A—A of Fig. 7;

Fig. 9 is a plan view showing an example of a lid of a square can of the invention;

Fig. 10 is a perspective view showing an example of a round can of the invention;

Fig. 11 is a perspective view showing an example of a square can of the invention;

Fig. 12 is a schematic drawing illustrating an example of an apparatus for producing the tubular body;

Fig. 13 is a perspective view showing an example of an edge folding apparatus for folding back one side edge of the laminated film;

Fig. 14 is a perspective view showing the pressure rollers and the other items associated therewith;

Fig. 15 is a side view showing a cartridge air heater (i.e. a local heating air heater);

Fig. 16 is a sectional view showing a mandrel (with part thereof omitted);

Fig. 17 is a partly sectional view showing the mandrel and the laminated sheet wound around the mandrel;

Fig. 18 is a perspective view illustrating the manner in which the laminated film is wound around the mandrel;

Fig. 19 is a perspective view showing a delivery belt that advances the resulting wound tube;

Fig. 20 is a plan view showing an example of a surface smoothing apparatus;

Fig. 21 is a sectional view showing a smoothing belt of the smoothing apparatus, in contact with the tubular body;

Fig. 22 is a perspective view showing an example of a surface smoothing apparatus;

Fig. 23(a) is a sectional side view showing the surface smoothing apparatus;

Fig. 23(b) is a sectional side view showing a surface smoothing apparatus, having an air cylinder in place of a silicon rubber block;

Fig. 24 is a perspective view showing an example of an apparatus for cutting the resulting tubular body into lengths;

Fig. 25 is a schematic drawing illustrating an example of a square tube forming apparatus for converting a round tube into a square tube;

Fig. 26 is a schematic drawing illustrating a heating unit of the square tube forming apparatus;

Fig. 27 is a perspective view showing an example of an apparatus for deforming a convex curved surface into a concave curved surface;

Fig. 28 is a sectional view showing the manner in which the deformation is accomplished;

Fig. 29 is a sectional view showing an example of a square tube forming mandrel for expanding a round tube outwardly to form a square tube;

Fig. 30 is a perspective view showing the head of the mandrel;

Fig. 31 is a perspective view showing the square tube forming mandrels mounted on a turret;

Fig. 32 is a perspective view showing an example of a cutting apparatus for cutting the tubular body into lengths;

Fig. 33 is a side view of a circular blade of the cutting apparatus;

Fig. 34 is a side view illustrating an example of a high-frequency heating apparatus for sealing the lid of a square can;

Fig. 35 is a plan view showing the major parts of the high-frequency heating apparatus;

Fig. 36 is a schematic drawing illustrating an example of an apparatus for fusion bonding a lid of the can of the invention;

Fig. 37 is a schematic drawing illustrating the manner in which heating is accomplished;

Fig. 38 is a perspective view showing a pressing tool;

Fig. 39 is a side view illustrating the action of the pressing tool;

Fig. 40 is a schematic view illustrating an example of an apparatus for fitting a lid to a round can; and

Fig. 41 is a perspective view showing the major parts of the apparatus shown in Fig. 40.

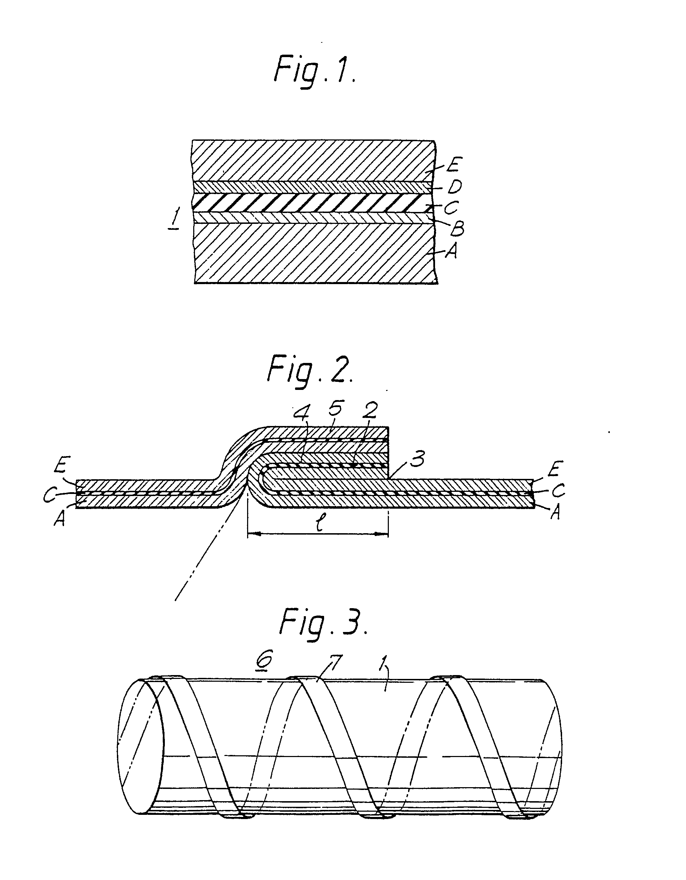

Fig. 1 shows the cross section of one example of a laminated film 1 for a food container. It consists of a 70 μ thick polypropylene layer A (the innermost layer), a 7 μ thick carboxylic acid-grafted polypropylene layer B (Liothene, a product of Toyo Ink Mfg. Co., Ltd.), a 9 μ thick aluminium foil C, a urethane-based adhesive layer D (4.5 g/m²), and a 30 μ polypropylene layer E (the outermost layer), laminated one upon another in the order listed. The laminated film 1 of such structure is superior in physical properties such as water resistance and oil resistance and is suitable for food and drink containers. Moreover, it is resistant to retorting.

Fig. 2 is a cross section showing one side edge 2 of the laminated film 1, folded back and bonded at point 3, and the other side edge 5 of the same laminated film 1, overlapped onto and bonded onto the surface 4 of the folded portion. Thus, the one side edge 2 of the laminated film 1 is folded back and is bonded in such a manner that air bubbles are not entrapped under the folded edge 2. The one side edge 2 is

5

folded outwardly rather than inwardly so that the cut end of the laminated film 1 does not come into contact with the contents of the can. This protects the contents of the can from being affected by the intermediate layer C, the adhesive layers B and D, and the outermost layer E (although in the can of the particular example as shown in Fig. 1 this is not a problem). The width 1 of folded portion depends upon the diameter of the tube, the bonding strength, and the airtightness required; usually it is 2 to 20 mm. The folded edge 2 is bonded at point 3 in such a manner that air bubbles are not entrapped thereunder. Bonding may be accomplished with an adhesive, but usually it is effected by fusion bonding because the surfaces of the same material face each other. This bonding prevents irregularities due to release of the folded edge 2, from occurring in the resulting tubular body 12. Moreover, this bonding eliminates air bubbles, which bubbles might expand to lift the molten plastics coated thereon by a T-die 29 (to be described later), causing irregularities to the surface of the body member. Preventing the occurrence of surface irregularities is important for the appearance of the finished can. It is also important for the easy and secure fitting of the lid of the can. In addition, the elimination of air bubbles prevents uneven heating during retorting.

A test for the appearance and the fitting of a lid 13 was carried out using a body member 12a prepared in such a manner that the presence of air bubbles was permitted. The appearance was so poor that it was impossible to hide the surface irregularities by direct printing or by the use of paper or plastics material labels which are commonly used for blow-moulded or injection-moulded plastics material containers. The lid was fitted to the body member 12a using a high-frequency heating means and an infrared line heater, which are described later. However, it was impossible to contact bond the lid uniformly all over the periphery of the lid because the open end of the body member 12a was deformed in conformity with the irregularities. The failure rate during sealing was about 5%. The surface irregularities render the can useless. However, it is possible to obtain a uniform and smooth body member by eliminating entrapped air bubbles. As the result, it becomes possible to perform direct printing and to obtain secure sealing.

The other side edge 5 of the same laminated film is overlapped onto and bonded onto the surface 4 of the folded portion in such a manner that air bubbles are not entrapped thereunder. Air bubbles are eliminated for the same reason as mentioned above. Bonding should preferably be performed by fusion bonding.

As shown in Fig. 3, the overlapping and bonding of the side edges 2 and 5 forms at tube 6. The tube 6 may be formed by spirally winding the laminated film 1, as shown in Fig. 3, or by butt sealing the two side edges 2 and 5 of the laminated film 1.

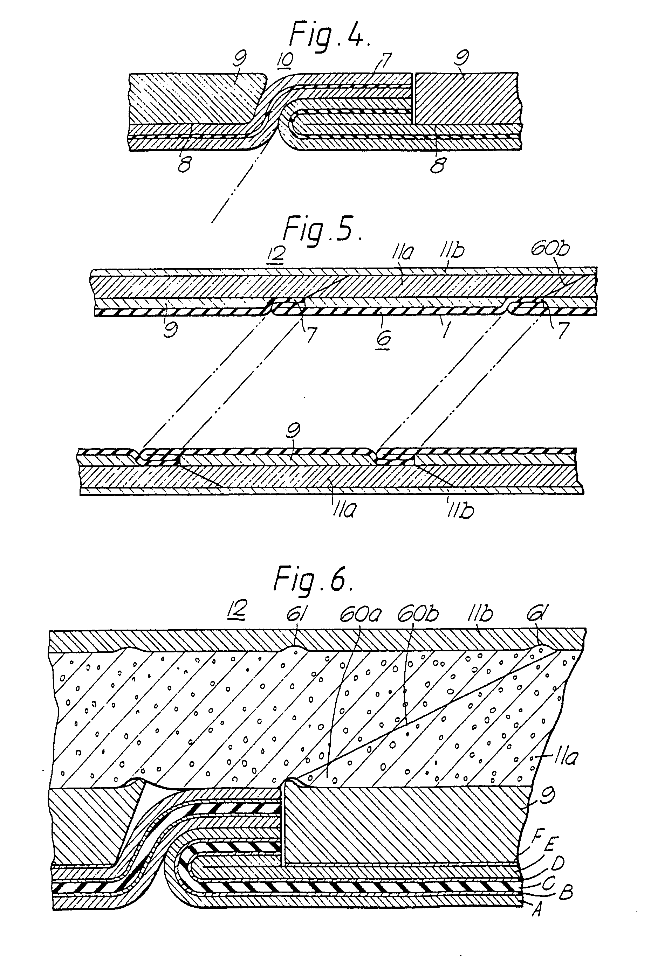

The tube 6 thus formed may be used as such as the body member of the can. However, it is also possible to use this tube 6 as a contents-protecting layer and to laminate a supporting layer onto the outside thereof. In such a case, as shown in Fig. 4, it is desirable to smooth the surface by bonding an additional film 9, which has a thickness almost equal to the height of the projecting seam 7 formed on the tube 6 by bonding of the two side edges 2 and 5, all over the external surface 8 of the laminated film, except on projecting seam 7. The material of the additional film may depend upon the intended use of the can. In the illustrated example, a 200 µ thick polypropylene film is bonded with a urethane-based adhesive.

A film proper may be laminated, in addition to the additional film 9, on the supporting layer outside the tube 6. For instance, a polyolefin 11a containing an inorganic material may be coated on the film 9. This imparts rigidity to the tube 6, increases its load bearing ability, facilitates the fitting of the lid, and reduces the change of the can volume. The use of a polyolefin containing an inorganic material has another advantage, namely the inorganic material lowers the burning calorie and prevents the plastics material from melting and flowing during combustion. Thus, waste cans can be held upright during their incineration. Moreover, the inorganic material improves the thermal conductivity, so that the contents of the can can be heated or cooled rapidly and uniformly.

The inorganic material is preferably calcium carbonate, talc or mica, each in powder form. Calcium carbonate and talc are preferred. It is preferably used in an amount of 20 to 90 wt%, more preferably 40 to 70 wt%, based on the mixture. For rapid and uniform mixing, it is desirable to add a titanium coupling agent such as isopropyl triisostearoyl titanate, a silane coupling agent such as tetra-n-butoxysilane, or a zirconium coupling agent such as tetra-n-butoxy zirconium, to the inorganic material in an amount of 0.1 to 10 wt%, preferably 0.5 to 3 wt%. The mixture may further contain a pigment such as titanium oxide, for the purpose of colouring it.

The following Table 1 gives the properties of a 50/50 mixture of propylene (PP) and calcium carbonate or talc. The following Tables 2 and 3 give the physical properties of a tubular body 12 constructed as shown in Fig. 6 (except that the layer 11b is absent), as described below.

**0 113 160**

TABLE 1 (Properties of mixture)

| | PP (50%)/ CaCO₃ (50%) | PP (50%)/ talc (50%) | PP (100%) (control) |
|---|---|---|---|
| Stiffness | 2.4 | 2.9 | 1.0 (times) |
| Impact strength (20°C) (kg-cm/cm) | 90 | 103 | 107 |
| Impact strength (−5°C) (kg-cm/cm) | 70 | 41 | 107 |
| Heat shrinkage | 0.35% | — | 0.66% |
| Heat seal strength | 0.85 | 0.58 | 1 (times) (6.29 kg) |

TABLE 2
(Compression test)
Sample and method: A cylindrical tube, 53 mm in diameter and 130 mm high, was pressed in the longitudinal direction at a rate of 10 mm/min.

| Material | Thickness (mm) | n | Strength (kg) | Average |
|---|---|---|---|---|
| PP (50%)+ | 0.7 | 3 | 62, 58, 56 | 59 |
| CaCO₃ (50%) | 0.8 | 2 | 80, 76 | 78 |
| | 0.9 | 3 | 113, 105, 104 | 107 |
| PP (100%) (control) | 0.9 | 2 | 90, 90 | 90 |

TABLE 3
(Resistance to retorting)
Samples: A round can filled with 0.27 kg of water, with a PP lid fitted.
A square can filled with 0.31 kg of water, with an aluminium lid fitted.
Retorting conditions: Rotary retorting sterilizer:
temperature: 125 to 130°C,
pressure difference: 1.0 kg/cm²
speed of rotation: 6 rpm
$F_o$ value: 15

| Can shape | Material | Retorting temperature | Thickness (mm) | Thermal conductivity (Kcal/m²hr°C) | Deformation of body |
|---|---|---|---|---|---|
| Round | PP( 50%)+ CaCO₃ (50%) | 125°C | 0.7 | 191 | None |
| " | " | 125°C | 0.8 | 178 | None |
| " | " | 125°C | 0.9 | 171 | None |
| " | PP (100%) | 125°C | 0.9 | 130 | None |
| " | Steel | 125°C | — | 340 | None |
| Square (i.e. angular) | PP (50%)+ CaCO₃ (50%) | 130°C | 0.9 | — | None |
| " | PP (100%) | 130°C | 0.85 | — | None |

7

Other properties

The incorporation of calcium carbonate or talc improved the ability of a round tube to be formed into a square tube.

The tubular body of the above-mentioned structure may be coated further with a plastics material, as required, to improve the smoothness of the outside surface and to make the outside surface glossy. This smoothing treatment is effective, particularly for an outermost layer formed by a plastics material containing an inorganic material, in which case the surface is rough.

The thickness of the tubular body 12 constructed as mentioned above may be such that the can is self-supporting and that the cans can be piled one upon another. It is usually 300 to 3000 μ, and more usually 500 to 1500 μ.

Fig. 5 shows an example of the structure of the tubular body, and Fig. 6 is an enlarged view thereof. The tubular body consists of the laminated film 1, serving as a contents-protecting layer, and of a supporting layer. The former consists of a 70 μ thick polypropylene layer A, a 7 μ thick carboxylic acid-grafted polypropylene layer B, a 9 μ thick aluminium foil C, a urethane-based adhesive layer D (4.5 g/m²), and a 30 μ thick polypropylene layer E. The supporting layer consists of a urethane-based adhesive layer F (4.5 g/m²), a 200 μ thick additional polypropylene film 9, an approximately 600 μ thick coated plastics material layer 11a, and a 10 to 20 μ thick surface layer 11b. The coated plastics material layer 11a consists of a 1:1 mixture of polypropylene and calcium carbonate, and the surface layer 11b consists of a polypropylene block copolymer.

Usually, the tubular body 12 is cut in lengths and then subjected to printing or labeling before it is used as the body member of a can. Prior to printing, the plastics material coating for smoothing may undergo corona treatment or flame treatment.

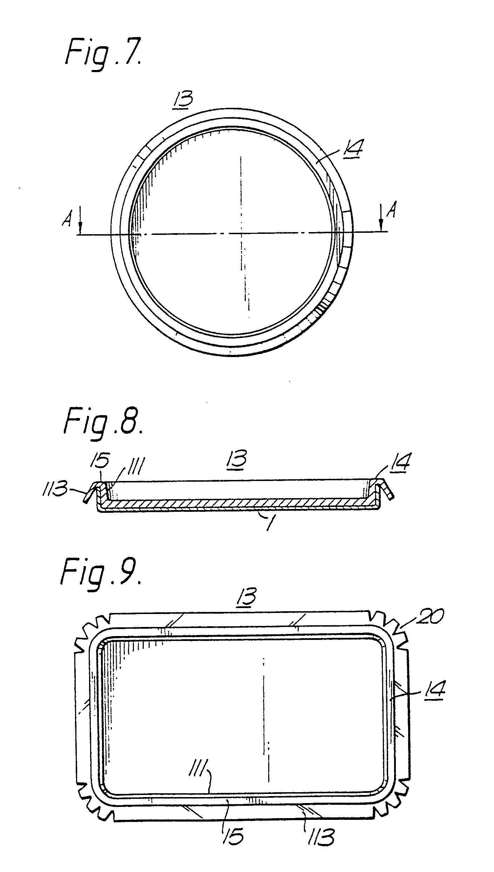

The lid 13 as shown in Figs. 7 and 8 or in Fig. 9 is fitted to the body member 12a comprising the tubular body 12. The lid 13 shown in Figs. 7 and 8 is used for a round can. At its periphery it has a peripheral ridge which consists of an inner wall 111, a top 15, and an outer wall 113, and is fitted and bonded to the open end of the body member 12a. Fig. 8 is a sectional view taken in the direction of the arrows along the line A—A of Fig. 7. The back side of the peripheral ridge 14 is fitted to the open end 110, but, in the example, the inner wall 111 is bonded to the inside wall of the open end 110. For complete bonding with sufficient bond strength, the inside wall should be higher than 4 mm.

The lid 13 shown in Fig. 9 is used for a square can. It is basically of the same structure as the lid shown in Fig. 7, except that each corner of the outer wall of the peripheral ridge 14 has four notches 20.

The lids 13 may be formed by bonding the laminated film 1 used for the tube 6, to the underside of an injection-moulded polypropylene lid.

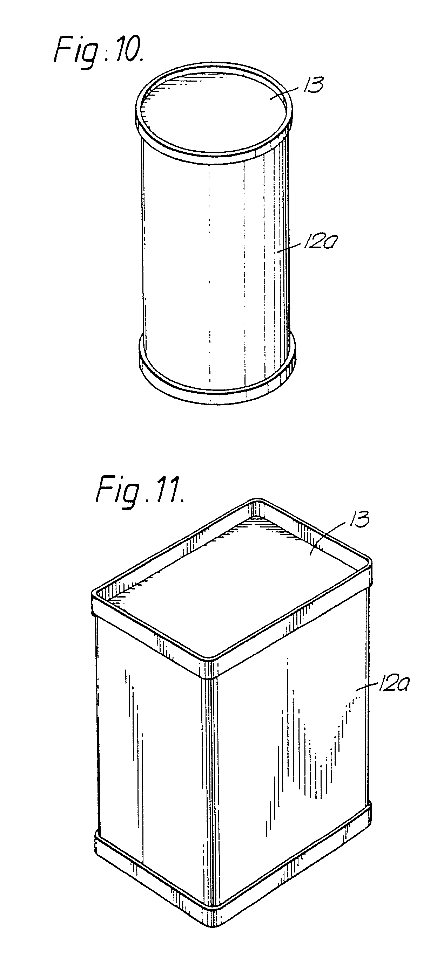

Fig. 10 is a perspective view showing an example of a round plastics material can of this invention, and Fig. 11 is a perspective view showing an example of a square plastics material can of this invention.

An example of the apparatus for producing the plastics material can of this invention will now be described.

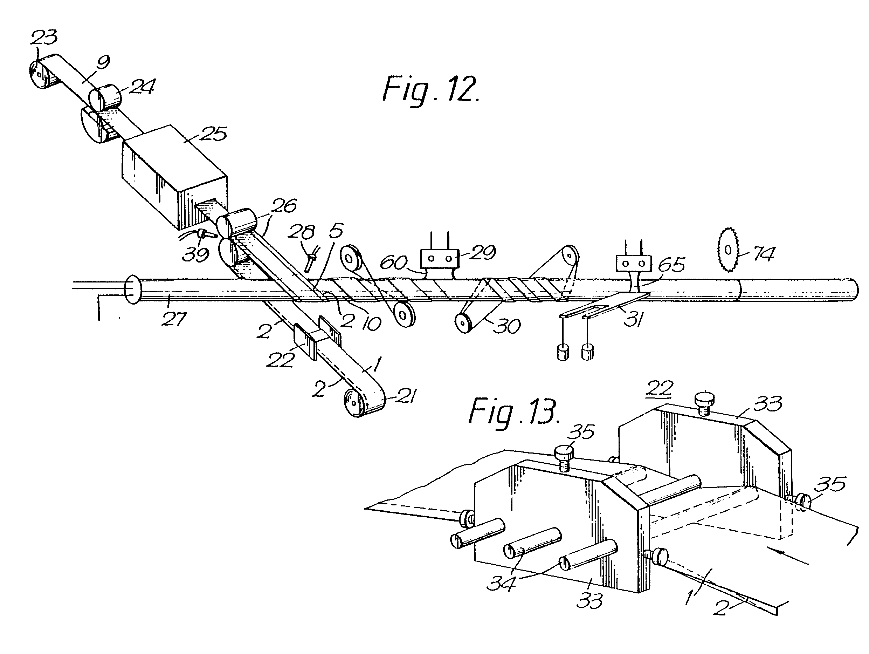

Fig. 12 is a schematic drawing illustrating an apparatus for producing the tubular body 12 from a rollstock 21 of the laminated film 1 and from a rollstock 23 of the addition film 9. The laminated film 1 is payed out from the rollstock 21. One side edge 2 of the laminated film 1 is folded back by an edge folding apparatus 22. The laminated film 1 then passes under a mandrel 27, to a pair of pressure rollers 26. The additional film 9 is payed out from the rollstock 23. One side of it is coated with an adhesive by an adhesive applicator 24. Then, the adhesive is dried by a hot air dryer 25 and the additional film 9 is bonded to the laminated film 1 by the pressure rollers 26. The resulting laminated sheet 10 formed by the bonding of the additional film 9 to the laminated film 1 is wound around the mandrel 27, and the overlapping side edges 2 and 5 are bonded each other by an air heater 28. A molten plastics material 60 is extruded from the T-die 29 so as to form a coating on the laminated sheet 10. The coated plastics material is smoothed by a smoothing belt 30 and then by a doctor knife 31. Finally, the resulting tubular body is cut in lengths by a circular saw 74.

Fig. 13 is a perspective view showing the edge folding apparatus 22. This apparatus consists of two width regulating plates 33 and three rods 34 which adjust the space between the width regulating plates. Each rod slidably penetrates the width regulating plates, and is fastened by screws 35. When the laminated film 1 is passed through this edge folding apparatus 22, one edge 2 of the laminated film 1 is folded back continuously in a specified width. The edge folding apparatus 22 is not limited to this particular example. For example, folding may be accomplished by placing the member that defines the width at a position where the member applies a proper force towards the folding direction, or by using a rod that contacts the one edge 2 of the laminated film 1.

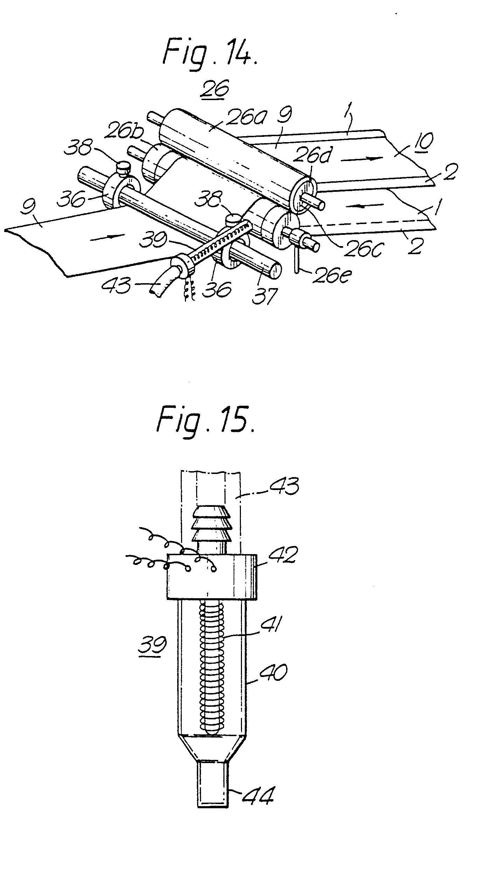

Fig. 14 is a perspective view showing the pressure rollers 26. The pressure rollers 26 press the folded edge 2 of the laminated film 1 and bond it in such a manner that air bubbles are not entrapped. Moreover, the pressure rollers 26 bond the additional film 9 to the laminated film in such a manner that air bubbles are not entrapped. The pressure roller unit consists of an upper roller 26a and a lower roller 26b. The upper roller 26a consists of a metal roller 26c covered with a thick rubber body 26d serving as the nip roller. The rubber body 26d increases the contact pressure between the rollers 26a and 26b because of its resilience, so that air bubbles between the laminated film 1 and the folded edge 2 and between the laminated film 1 and the additional film 9 are expelled for complete bonding. The rubber body 26d should be a

heat-resistant one such as silicone rubber. The upper roller 26a is provided with a vertical position adjusting mechanism (not shown) that operates such that the rollers 26a and 26b produce an adequate contact pressure.

The lower roller 26b is a metal roller provided with a drive mechanism (not shown) and a cooling water duct 26e. The drive mechanism is of variable speed type, so that the running speed of the films 1 and 9 coincides with that of the laminated sheet 10 on the mandrel 27. Temperature control water (at 40 to 50°C) introduced through the water duct 26e cools the lower roller 26b, removing heat from the additional film 9 and the side edge 2 of the laminated film 1, and preventing the films 1 and 9 and the laminated sheet 10 from meandering and twisting.

At the place through which the additional sheet is fed to the pressure rollers 26, there are two rings 36 which define the position of the additional film 9. The rings are slipped onto a rod 37 and are fixed at the required positions by screws 38. The rings are intended to bring the additional film 9 to a desired position on the laminated film 1 so that the additional film is accurately overlapped onto the surface confined by the projecting seam 7 formed by bonding the two side edges 2 and 5.

A cartridge air heater 39, which acts as a local heater, points towards the folded edge 2 of the laminated film passing onto the lower roller 26b. Fig. 15 is a side view of the cartridge heater 39. This heater 39 is intended to heat and melt the folded edge 2. It consists of a glass tube 40 containing a heating wire 41, a socket 42 at the base of the glass tube, an air supply pipe 43 connected to the socket, and a nozzle 44 through which heated air is blown.

The laminated film 1 with the folded edge 2 is fed to the pressure rollers 26 from the lower right direction in Fig. 14. Then, it is turned to the right by the lower roller 26b. While it is turned back by the lower roller 26b, the folded edge 2 is heated by hot air blown by the cartridge heater 39. The folded edge 2 is then bonded by pressure when it is rolled by the upper roller 26a and the lower roller 26b. The additional film 9 is fed from the left direction in Fig. 14. It is appropriately positioned by the two rings 36 when it passes over the rod 37. Then, it is bonded to the laminated film 1 as it is rolled by the upper roller 26a and the lower roller 26b. In this embodiment, the pressure roller 26 performs contact bonding for the two parts simultaneously; however, it is also possible to perform the contact bonding separately using two pairs of pressure rollers.

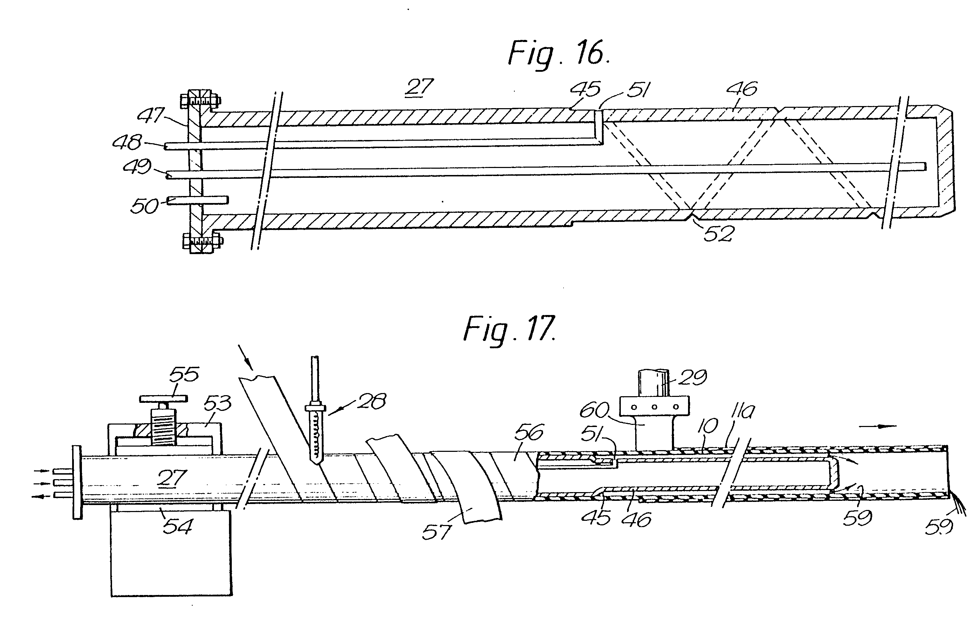

The resulting web emerging from the pressure rollers 26 is wound around the mandrel 27. The cross section of the mandrel 27 is shown in Fig. 16.

The mandrel 27 is a round aluminium pipe with both ends closed. The surface of the mandrel is treated with a fluoroplastics material (i.e. "Teflon") so that the web wound thereon slips easily. The treatment with the fluoroplastics material may be accomplished by changing the surface into a porous hard aluminium oxide and then impregnating the porous structure with the fluoroplastics material.

The mandrel 27 has a small step 45 at its centre, and the forward portion of the mandrel beyond this step is a small diameter portion 46 having a smaller diameter than the base portion. To the base end of the mandrel is bolted a cover plate 47. The cover plate 47 is penetrated by a water duct 48, a water duct 49 and a discharge pipe 50. The water duct 48 supplies water to the space formed between the small diameter portion 46 of the mandrel and the tube 6 of the laminated film 1. The water duct 49 supplies water to cool the mandrel. A discharge port 51 for the water duct 48 is provided slightly forward from the step 45. A guide groove 52, which starts from the discharge port 51, is spirally formed over about one-third of the length of the small diameter portion 46. As shown in Fig. 17, the water supplied to the space between the small diameter portion 46 of the mandrel and the laminated sheet tube 56 formed on the mandrel 27 cools the tube 56 and prevents softening of the tube 6 and the formation of wrinkles due to expansion of the aluminium foil. In addition, the water causes the tube 56 to float so that it is moved forward smoothly. The guide groove 52 is intended to allow the water to be supplied uniformly so that the tube 56 floats easily.

The mandrel 27 is fixed almost horizontally, with the base end clamped by two retaining plates 53 and 54, as shown in Fig. 17. A screw 55 is provided for moving the retaining plate 53 up and down.

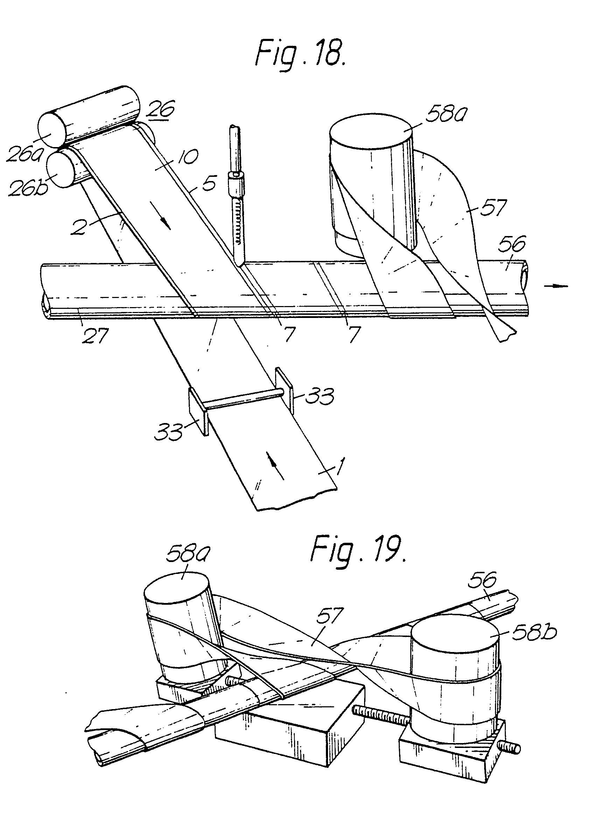

Fig. 18 is a perspective view showing the laminated sheet 10, which has been formed by pressure bonding of the additional film 9 onto the laminated film 1 by the pressure rollers 26, being wound around the mandrel 27. The laminated sheet 10 is wound in such a manner that the side edge 5 is overlapped onto the folded edge 2 of the laminated sheet 10 which has already been wound. Immediately before winding, the side edge 5 is heated by the cartridge air heater 28 which is identical to the heater 39. The overlapped portion is fusion-bonded by the tension generated by the pressure rollers 26 and the mandrel 27, in such a manner that air bubbles are not entrapped.

The tube 56 formed on the mandrel 27 is caused to rotate on the mandrel (which is fixed) and to move forward by a delivery belt 57 which moves around the tube 56. Thus, the tube 56 is discharged from the mandrel.

Fig. 19 is a perspective view showing the operation of the delivery belt 57. The delivery belt 57 is spirally wound once around the tube 56, and is passed over a pair of rotating rolls 58a, arranged one on one side of the mandrel 27 and the other on the other side of the mandrel 27. The rotating rolls 58a and 58b are driven by a motor (not shown). Movement of the belt causes the tube 56 to rotate and move forward.

The tube 56, with the overlapped part fusion-bonded, is then entirely coated with the molten plastics material 60, which is mixed with an inorganic material, and which is delivered from the T-die 29, as shown in Fig. 17. The mixing with the inorganic material may be accomplished by use of a conventional mixing

9

apparatus (not shown). Thus, for example, pellets of the mixture may be formed, which pellets should be dried so that the water content is less than 300 ppm, and preferably less than 150 ppm. If the water content is more than 300 ppm, film breakage may occur in the coated plastics layer 11a formed from the molten plastics material 60. The coating of the molten plastics material 60 should preferably be carried out on the small diameter portion 46 of the mandrel 27, because the tube 56 is cooled from within by cooling water 59 delivered from the discharge port 51. This prevents the tube 56 from getting soft. The molten plastics material 60 should be extruded at such a position that edge 60a is slightly shifted to the right relative to the projecting seam 7, as shown in Fig. 6. If the edge 60a of the extruded resin is near to the projecting seam 7, it is easy to smooth out the spiral projection 61 formed on the surface of the coated plastics layer 11a using the smoothing belt 30, which is described later. If joint 60b between the extruded resin layers is on the projecting seam 7, bonding between the coated plastics material layers 11a becomes poor. This is true particularly in the case where the laminated film 1 contains an aluminium foil since this helps the projecting seam to cool rapidly.

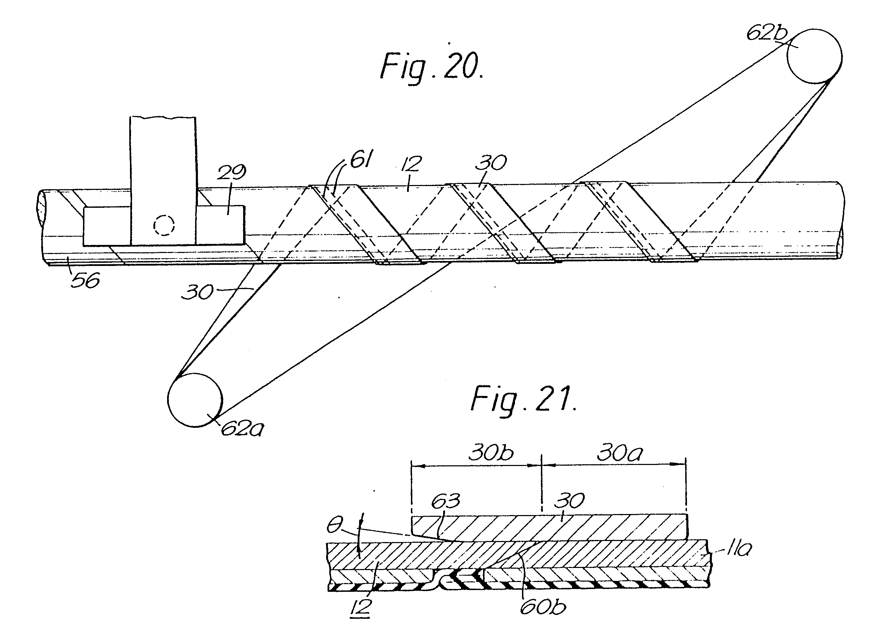

On the surface of the tubular body 12 coated with the molten plastics material 60, there is the spiral projection 61 mentioned above. This spiral projection 61 should be smoothed out by the surface smoothing means before the coated plastics material layer 11a solidifies completely. The spiral projection 61 tends to project above the projecting seam 7 formed by the joining of the side edges 2 and 5. It also tends to project above the joint of the coated plastics material layer 11a. They should together be smoothed out as shown in Fig. 20. The surface smoothing means not only smooths out the spiral projection 61 but also secures the joint 60b, eliminating air bubbles.

Fig. 20 is a plan view showing an example of the surface smoothing apparatus. The smoothing belt 30 thereof is wound three times around the spiral projection 61 and then passed over a pair of rolls 62a and 62b arranged at the lower sides of the mandrel 27. In operation, the drive roll 62a moves the smoothing belt 30 so as to smooth the spiral projection 61. Fig. 21 is a sectional view showing the smoothing belt 30 in contact with the tubular body 12. It is to be noted that the smoothing belt 30 has such a configuration that its lower face 63, with which the surface of the tubular body 12 to be smoothed out comes into contact, is slightly lifted so that the belt 30 presses down the spiral projection 61 gradually. If the smoothing belt 30 is a simple flat belt, the edge of the belt will form a depression. The face smooths the spiral projection 61, flattens the surface of the coated plastics material layer 11a, and secures the joint 60b. The angle ($\theta$) of the face 63 is usually 2 to 10°, and the width of the face 63 is about one-fifth of the total width of the smoothing belt 30. The smoothing belt 30 should be positioned such that part 30a of the smoothing belt 30, which part is about 1/2 to 3/4 of the total width of the smoothing belt 30, covers the solidified part of the coated plastics material layer 11a, and that part 30b of the smoothing belt 30, which part is about 1/2 to 1/4 of the total width of the smoothing belt 30, covers the molten part of the coated plastics material layer 11a. If the part 30a of the smoothing belt 30 is increased, the tubular body 12 tends to be deformed by the pressure of the smoothing belt 30. For lubrication during the smoothing treatment, the surface of the smoothing belt may be treated with silicone.

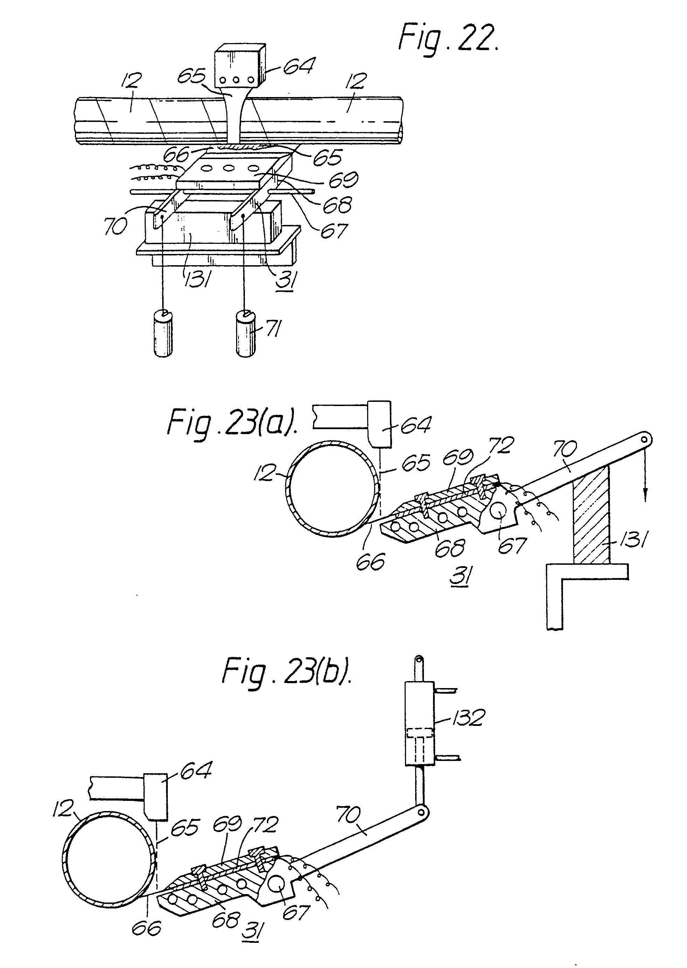

The tubular body formed as mentioned above is finally coated with a molten plastics material layer 65, which layer is smoothed. Figs. 22, 23(a) and 23(b) show an example of the surface smoothing apparatus comprising the doctor knife 31 which comes into contact with the lower part of the tubular body 12. The molten plastics material 65 fed from a die 64 is smoothly coated on the surface of the tubular body 12 by an elastic blade 66 on the doctor knife 31. The elastic blade 66 is held between a blade holder 68 and a blade presser 69. The blade holder 68 is rotatably mounted on an axis 67. The elastic blade 66 is pressed against the tubular body 12 by the force exerted by balance weights 71. The balance weights 71 are suspended from levers 70 extending along both side edges of the blade holder 68. The doctor knife 31 is isolated from the vibration of the mandrel 27 by the fact that the levers 70 are supported by a cushioning material 131 such as silicone rubber (as shown in Fig. 23(a)) or by an air cylinder 132 (as shown in Fig. 23(b)). Without the cushioning material, the doctor knife 31 will tend to form a striped pattern on the surface of the tubular body 12. The blade holded 68 is provided with a built-in heater 72 so that the molten plastics material 65 does not solidify on the elastic blade 66. The use of the elastic blade 66 makes the surface of tubular body 12 completely flat, smooth and glossy, so that the surface can receive printing directly.

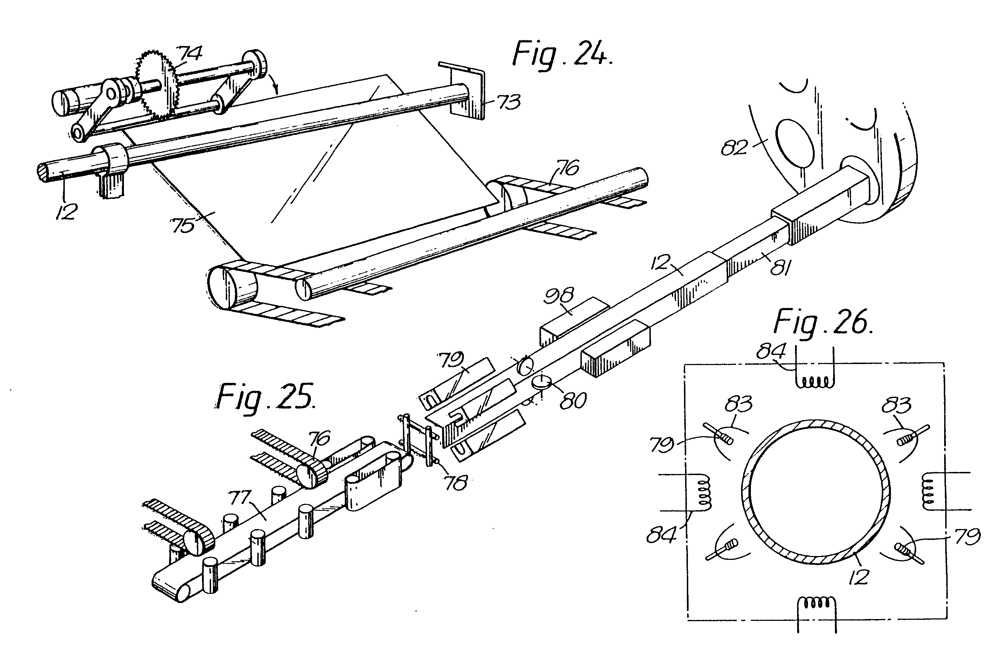

The tubular body 12 which has undergone surface smoothing treatment advances beyond the forward end of the mandrel 27, as shown in Fig. 24. When the end of the tubular body 12 comes into contact with a switch actuator 73, the circular saw 74 comes down to cut the tubular body 12 into lengths. The cut length of the tubular body 12 falls down slope 75 and is transferred to the next step by a conveyor 76.

When the tubular body 12 is to be used to make the body of a square can, the tubular body 12 is formed into a square tube. Fig. 25 shows an example of the square tube forming apparatus. The tubular body 12 is transferred by the conveyor 76 to a conveyor 77. The tubular body 12 is then moved in its longitudinal direction by the conveyor 77. It passes through four guide rollers 78 arranged in a square. The parts to be bent are heated by infrared line heaters 79. The surface between the bent parts is formed into an arcuate shape by wheel rollers 80. The tubular body is then expanded outwardly by a square tube-forming mandrel 81 mounted on a turret 82. Thus, a square tube 12 is formed.

As shown in Fig. 26, the infrared line heaters 79 are arranged at the positions corresponding to the parts to be bent. Each of the infrared line heaters has a concave reflector 83 which focuses the heat onto the part to be bent. Between the infrared line heaters are arranged four auxiliary heaters 84, which help in flattening the surfaces between the bent parts. These auxiliary heaters may be unnecessary depending on the material and thickness of the tubular body 12. This system is advantageous in that the size and aspect ratio can be changed easily, and that polygonal prisms can can be produced easily when the shape of the mandrel is changed and the number of the wheel rollers 80 is increased or decreased. Moreover, it is possible to change the line speed easily by adjusting the length or voltage of the infrared line heaters.

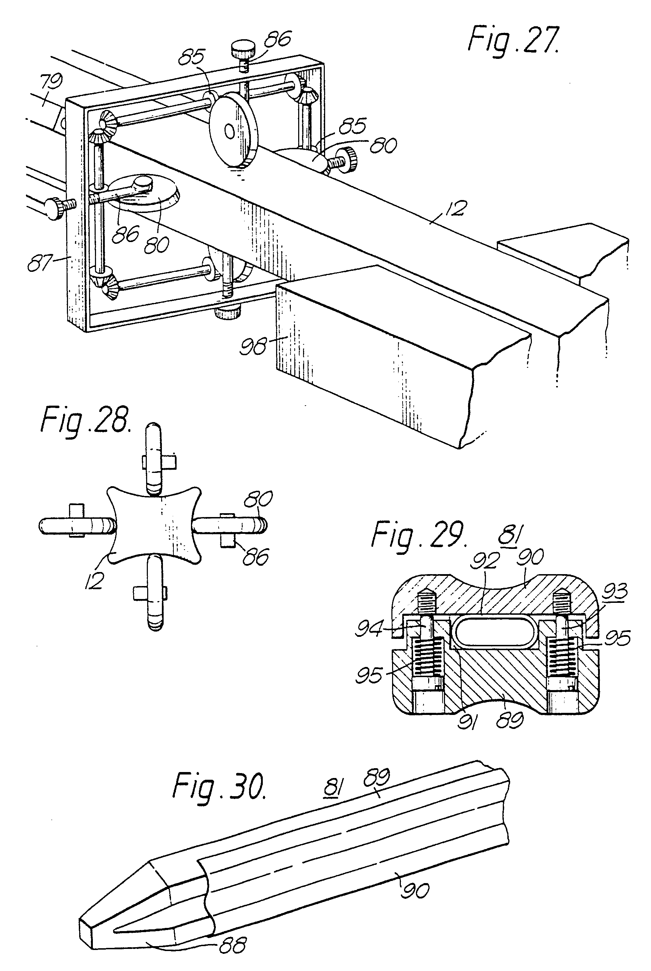

After the parts to be bent have been softened, the surface between the parts to be bent is formed into an arcuate shape by the wheel rollers 80. Fig. 27 is a perspective view showing the wheel rollers. Each wheel roller 80 is a metal disc covered with rubber, and each is driven by a small roller 85 which is in contact with the rubber periphery. Each wheel roller 80 is fixed to a frame 87 by a threaded rod 86. Fig. 28 is a sectional view showing the tubular body 12 being formed by the wheel rollers 80.

The tubular body 12 which has been formed by the wheel rollers 80 is then slipped on the square tube forming mandrel 81. Fig. 29 is a cross section of the mandrel 81, and Fig. 30 is a perspective view showing the head of the mandrel 81. The mandrel 81 is a rodlike body having a square cross section and a tapered head 88. The tapered head helps the tubular body 12 to be slipped onto the mandrel. The mandrel 81 is longitudinally split into two portions, namely a stationary portion 89 and a movable portion 90, except at the head 88 and at the base end (not shown). The stationary portion 89 has a longitudinal groove 91 on the side which mates with the movable portion 90. The longitudinal groove 91 houses a pneumatic tube 92. The movable portion 90 is slidably mounted on the stationary portion 89 by means of screws 93. The screws 93 are arranged in pairs at several places along the longitudinal direction, and are screwed to the movable portion 90 through the stationary portion 89. The shank 94 are each screw 93 is surrounded by a spring 95 which moves the movable portion outwardly or inwardly as the pneumatic tube 92 expands and shrinks.

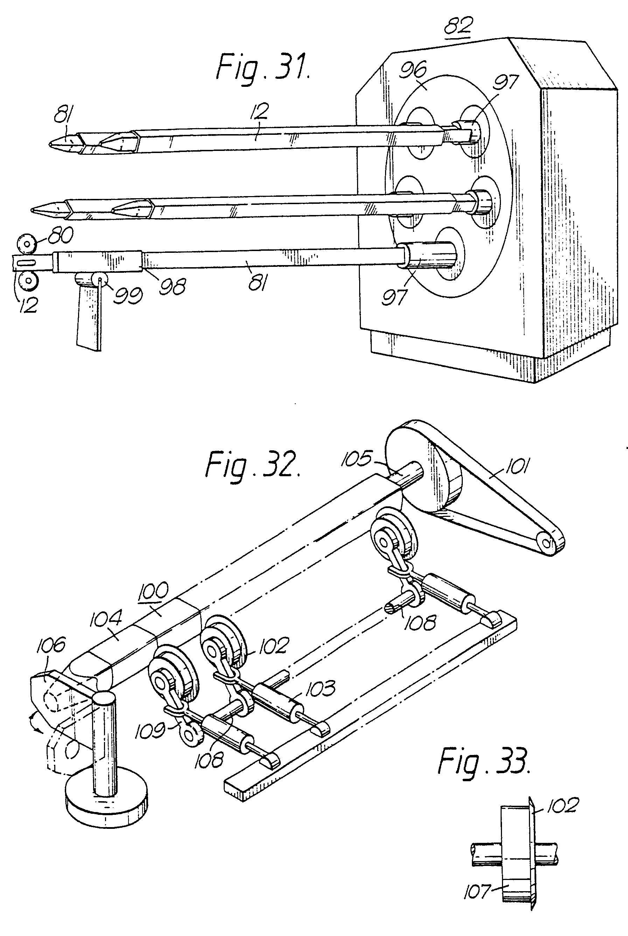

As shown in Fig. 31, five such square tube-forming mandrels 81 are annularly mounted on the turret 82. The turret 82 has a large rotary disc 96 that rotates intermittently. The rotary disc has an equal interval as respective shaft 97 which holds a respective one of the mandrels 81. Each shaft 97 is movable back and forth.

The tubular body 12 is driven forward by the wheel rollers 80, and is then slipped onto the square forming mandrel 81, with the movable section 90 retracted. While the bent parts of the tubular body 12 are still soft, compressed air is introduced into the pneumatic tube 92. Thus, the movable section 90 expands outwardly, forming the tubular body 12 into a square tube. The expansion of the mandrel 81 is limited by a side stop 98. The mandrel 81 is supported by a supporting roller 99. The shaft 97 retracts, with the mandrel 81 expanded and the tubular body held by the mandrel 81. Then, the rotary disc 96 turns one-fifth. The next shaft advances to cause the mandrel 81 fixed thereon to receive the next tubular body 12. After four-fifths rotation, the mandrel 81 retracts the movable section 90, permitting the cooled tubular body 12 to be extracted from the mandrel 81.

The square tube thus produced, or the round tube which does not undergo square tube forming, is then cut in lengths according to the desired can length. Fig. 32 is a perspective view showing an example of the cutting apparatus. This cutting apparatus consists of a receiving shaft 100 which supports the tubular body, a shaft drive mechanism 101, a number of circular blades 102, and a number of air cylinder 103 each of which presses a respective circular blade 102 against the receiving shaft under a fixed pressure. The receiving shaft 100 is covered with plastics material 104 for protection of the circular blades 102. One end of the receiving shaft 100 is removably mounted on drive shaft 105 by means of a claw (not shown). The other end of the receiving shaft 100 is supported by a supporting plate 106, which swings about 90° to permit the tubular body 12 (not shown) to be slipped onto the shaft 100. On one side of each circular blade 102 is a circular plastics material guide 107 which is slightly smaller in diameter than the blade and is arranged concentrically with the circular blade 102, as shown in Fig. 33. This guide prevents the circular blade 102 from advancing more than is necessary beyond the tubular body. A number of the circular blades 102 are provided, each being rotatably mounted on the upper end of a respective arm 109, with the lower end thereof rotatably mounted on an axis 108. Each circular blade 102 is pressed under a prescribed pressure against the receiving shaft 100 by the damper action of the respective air cylinder 103 attached to the middle of the respective arm 109. As the receiving shaft 100 rotates, the tubular body 12 is cut at prescribed intervals. When cutting is complete, the supporting plate 106 is turned 90°, and the tubular body is removed from the receiving shaft 100.

This apparatus is capable of cutting body round tubes and square tubes of any size, if the receiving shaft 100 is replaced. Cutting with this apparatus is accomplished by pressing the blades 102 having the guides 107 against the plastics material shaft 100. This cutting method is advantageous in that the circular blades 102 do not receive an excessive force even when cutting a square tube and therefore the life of the blades is extended. Moreover, unlike the conventional press cutting, the cutting method accomplishes neat cutting because the blade cuts as deep as the plastics material shaft 100. Another advantage is that the blades are not exposed more than necessary owing to the guides 107. That is preferred from the standpoint of safety.

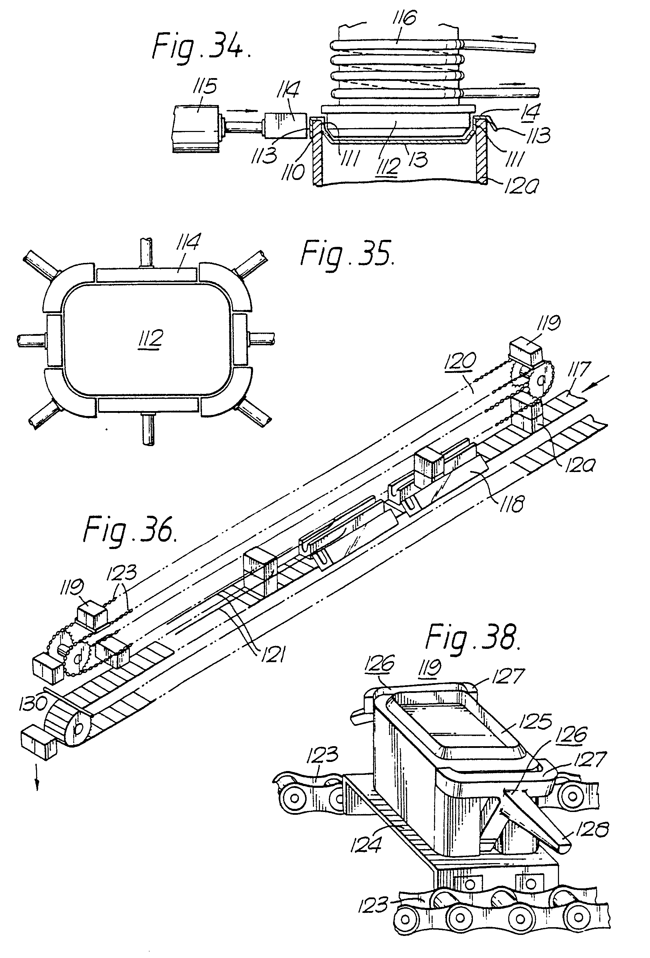

The open end 110 of the body member 12a which is formed by cutting the tubular body 12 in lengths is then provided with the lid 13, as shown in Fig. 34. An internal wall 111 of a peripheral ridge 14 of the lid 13 is heated by a high-frequency heating coil 116 while being held down by a die block 112. The high-frequency heating coil heats the aluminium foil in the laminated film 1 and the heated aluminium foil melts the plastics material laminated thereon (see Fig. 8). Then, a pressing block 114 is pressed against external wall 113 of the peripheral ridge 14. This fusion-bonds the internal wall 111 of the peripheral ridge 14 to the inner periphery of the open end. The pressing block 114 is divided into several sections as shown in Fig. 35, so that each section is moved back and forth by cylinder 115. The pressing block 114 is made of non-metallic material so that it is not affected by high frequency. The high-frequency coil 116 is cooled internally by water.

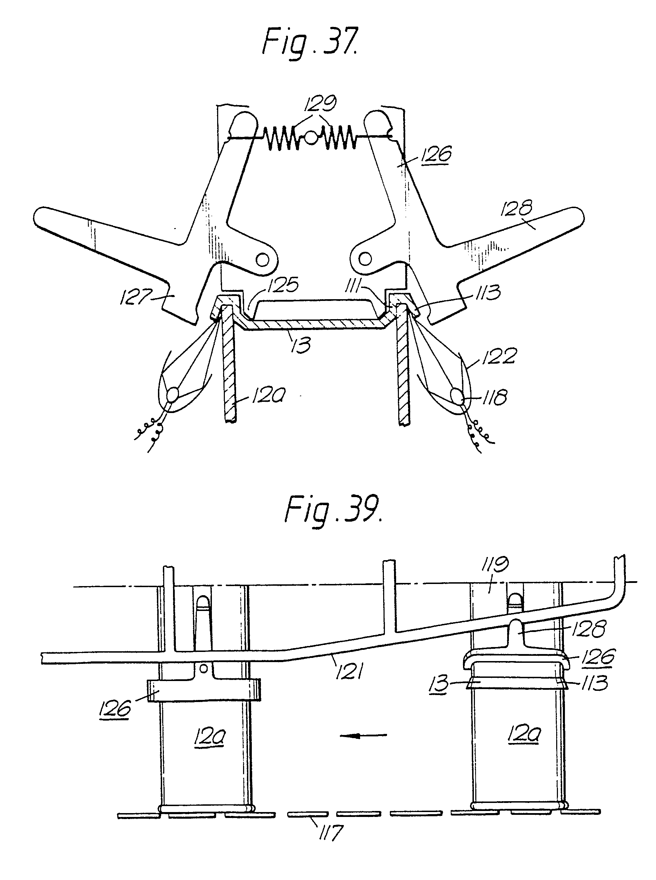

After the fusion bonding is performed for the internal wall 111 of the lid 13, the external wall 113 is fusion-bonded using the apparatus as shown in Fig. 36. This apparatus consists of a chain belt conveyor 117, an infrared line heater 118, a chain conveyor 120, and guide bars 121. The chain belt conveyor 117 transfers the body member 12a with the lid 13 attached. The infrared line heater 118 heats the external surface of the open end of the body member 12a and the internal surface of the external wall 113 of the lid 13, the outside wall 113 of the lid 13 attached to the body member 12a being still open. The chain conveyor 120 is installed above and parallel to the chain belt conveyor 117, and is provided with pressing tools 119 which press down the lid 13. The guide bars 121 actuate the pressing tools 119. The infrared line heater 118 is provided with a concave reflector 122 focusing on the gap between the external surface of the open end of the body member and the external wall 113 of the lid 13, which is still open, as shown in Fig. 37. Two pairs of the infrared line heaters 118 are arranged on both sides of the chain belt conveyor 117.

The chain conveyor 120 consists of two parallel stretched chains 123. A number of base plates 124 are mounted across the chains 123. Each base plate 124 is provided with pressing tool 119. A perspective view of the pressing tool 119 is shown in Fig. 38. The pressing tool 119 is a box that mates with the body member 12a. On the top of the box is a projecting peripheral ridge 125 which fits the internal wall 111 of the lid 13. On both sides of the box are rotatable pressing units 126. Each pressing unit 126 has a pressing head 127 that matches with the external wall 113 of the lid 13. When lever 128 projecting outwardly is pushed up, the pressing head 127 presses the external wall 113 of the lid 13 against the body member 12a.

In operation of this apparatus, the body member 12a with the lid 13 attached is brought in by the chain conveyor 117 from the right side in Fig. 36. At the right end of the chain conveyor 120, the projecting peripheral ridge 125 of the pressing tool is caused to fit into the internal wall 111 of the lid 13. As the tubular body is further transferred leftward on the chain belt, the parts to be joined are heated by the infrared line heaters 118 and then by a cartridge air heater 133. As the body member 12a is further transferred leftward on the chain conveyor 120, the levers 128 are pushed down gradually by a pair of the guide bars 121 installed above the chain belt. This action causes the external wall 113 of the lid 13 to be contact-bonded to the body member 12a. As the lever passes the left end of the guide bar 121, the pressing units 126 are raised by springs 129. At the left end of the chain belt conveyor, the body member 12a with the lid 13 sealed is released by a baffle rod 130. The part which is sealed by this apparatus is confined to two sides of the lid 13. Therefore, one more identical unit should be installed in series to seal the remaining sides.

In this apparatus, local heating air heaters such as cartridge air heaters may be added, as required, and the infrared line heaters 118 may be omitted.

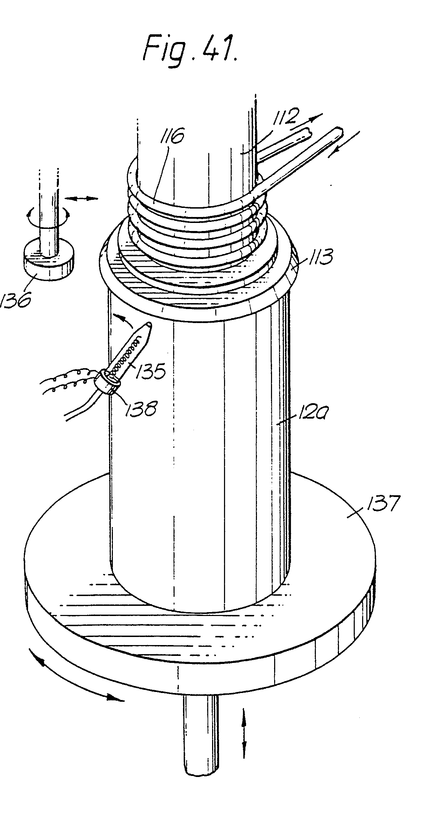

The lifting of lids to square cans can be performed using apparatus as shown in Figs. 34 to 39. In the case of round cans, the lid fitting may be performed by the method as shown in Figs. 0 and 41.

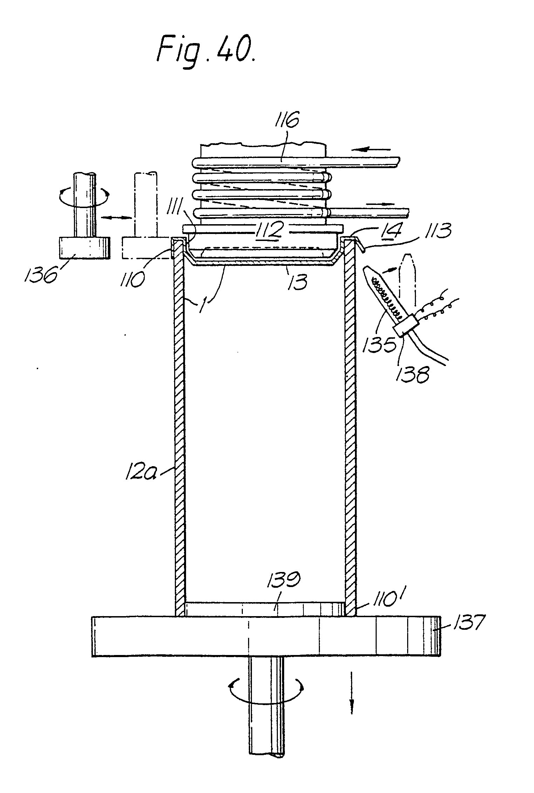

Fig. 40 illustrates the method for fitting the lid 13 to a round can. Fig. 41 is a perspective view showing the major parts of the apparatus as shown in Fig. 40. This apparatus consists of a high-frequency coil 116 which heats the specific part, a die block 112 which presses the peripheral ridge of the lid from inside, a cartridge air heater 135, a pressing roller 136, and a turntable 137.

The high-frequency coil 116 heats the aluminium foil in the laminated film 1 constituting the contents protecting layer and also the aluminium foil bonded to the inside of the lid 13, causing the internal wall 111 of the lid 13 to fusion-bond to the internal peripheral wall of the open end 110 of the body member 12a. The high-frequency coil 116 is internally cooled by water. The die block 112 is loosely inserted into the high-frequency coil 116. The lower expanded part fits into the depressed dishlike part of the lid 13 and holds the lids 13 together with the body member 12a. It is turned slowly by an external drive mechanism (not shown). The bottom of the die block 112 is concave. The cartridge air heater 135 heats the internal surface of the external wall 113 of the open lid 13 and the external surface of the open end 110 of the body member 12a, and fusion-bonds them together. The cartridge air heater 135 turns by 30° (between the vertical position to the inclined position) around a shaft at a socket 138. The pressing roller 136 presses the external wall 113 of the lid against the body member 12a. The pressing roller 136 is made of a plastics material. The roller 136 is rotatable and the entire assembly is movable in the lateral direction. The turntable 137 has at its center a projection 139 which fits into the lower open end 110' of the body member 12a, or into the concave top of the lid. It is rotatable and movable in the vertical direction.

This apparatus operates as follows. At first, the lower end of the body member 12a is fitted to the projection 139 of the turntable 137. The turntable 137 is lifted so that the upper surface of the lid 13 fits into the die block 112. The die block 112 is turned and the cartridge air heater 135 is inclined. The internal surface of the external wall 113 of the lid 13 and the external surface of the open end 110 of the body member 12a are heated. When the heated parts melt, the cartridge heater is returned to the vertical position and heating is stopped. The pressing roller 136 is moved laterally so that it presses the external wall 113 of the lid against the open end 110 of the body member 12a to achieve fusion bonding. Simultaneously with the movement of this pressing roller 136, the high-frequency coil 116 generates high frequency so that the internal wall of the lid is heated and fusion-bonded. When fusion-bonding is complete, the pressing roller 136 is retracted from the lid 13. The turntable 139 is lowered. The body member 12a with the lid 13 fitted is dismounted. After filling, the other side of the body member 12a is closed with a lid 13 in the same manner as mentioned above.

The sealing system as described above performs dual sealing which ensures complete sealing.

The present invention has been described with reference to preferred embodiments; but the scope of this invention is not limited to them. Any type of laminated material can be used for the body member. In the preferred embodiments described above, the additional sheet 9 is used; however this additional sheet 9 may be omitted if the irregularities on the body (i.e. the projecting seam 7) are acceptable and they have nothing to do with strength etc. An adhesive is used where fusion bonding is difficult to perform or where the heating for fusion-bonding deforms the entire shape. It goes without saying that the adhesive should be used properly according to the construction of the body member and the apparatus for producing the body member.

**Claims**

1. A can having a body member comprising (a) an inner contents-protecting layer (A, C, E) forming a tubular body (6) made of a strip and having a spiral seam (7) and (b) an outer supporting layer, the surface of said outer supporting layer (9, 11a, 11b) having been subjected to a smoothing treatment, characterised in that said tubular body (6) is wholly or mainly made of plastics material and its spiral seam (7) includes a folded part formed by folding back and outward onto an outer surface of said contents protecting layer one side edge (2) of a strip of laminated film (1), bonding the folded part (2) by preventing air bubbles from being entrapped thereunder, overlapping the other side edge (5) of the same laminated film (1) on the folded surface, and bonding said side edges by preventing air bubbles from being entrapped between said side edges (2, 5); and in that said outer supporting layer is a supporting plastics layer (9, 11a, 11b) covering said outer surface of said contents-protecting layer, wherein said supporting plastics layer (9, 11a, 11b) comprises a coated plastics layer having a thickness and composition sufficient to impart rigidity to the tubular body (6).

2. A can as claimed in claim 1, wherein either or both of the bonding of said one side edge (2) to the laminated film (1) and the bonding of said other side edge (5) to said folded one side edge (2) are accomplished by fusion bonding.

3. A can as claimed in claim 1 or 2, wherein said supporting plastics layer (9, 11a, 11b) comprises (A) a film (9) over the outer surface of the tubular body (6), except for the projecting seam (7) formed by the bonding of said folded one side edge (2) to the laminated film (1) and the bonding of said other side edge (5) to said folded one side edge (2), the thickness of said additional film (9) being approximately equal to the height of said projecting seam (7); and (B) at least one plastics material layer (11a, 11b) over the outer surface of said additional film (9) and over the outer surface of said projecting seam (7).

4. A can as claimed in claim 3, wherein either or both of said film (9) and said at least one plastics material layer (11a, 11b) contains powdered inorganic material.

5. A can as claimed in any of claims 1 to 4, wherein said laminated film (1) comprises at least an outer layer (E) of a plastics material such as a polyolefin, an inner layer (A) of a plastics material such as a polyolefin, and an intermediate layer (C) of foil such as aluminium foil.

6. A can as claimed in any of claims 1 to 5, further comprising a lid (13) over an open end of said body member, which lid (13) includes a peripheral ridge (14) having an internal wall (111) and an external wall (113).

7. An apparatus for forming the body member of a can as claimed in claim 1, which apparatus comprises:

means (22) for folding one side (2) edge of a laminated film (1) outwardly and back upon itself, said means (22) comprising width regulating members (33) which regulate the width of the laminated film (1) payed out from a roll (21) when passing between the width regulating members (33) and which consequently cause said one side edge (2) of the laminated film (1) to fold, and confining members (34) serving to cause said folded one side edge (2) to be folded back upon the laminated film (1) by virtue of the fact that the laminated film (1) passes above one said confining member (34) and below another said confining member (34);

means (26, 39) for bonding said folded one side edge (2) to the laminated film (1) in a manner such as to prevent air bubbles from being entrapped therebetween, said means (26, 39) comprising a pair of rollers (26) between which is passed the laminated film (1) with said folded one side edge (2) thereof folded back upon the laminated film (1), and heating means (39) for the application of heat to said folded one side edge (2);

means (27) for overlapping the other side edge (5) of the same laminated film (1) with said folded one side edge (2), said means (27) comprising a fixed mandrel (27) around which the laminated film (1) is spirally wound, means (57) for causing the laminated film (1) to rotate around the fixed mandrel (27), and means (28) for bonding said other side edge (5) to said folded one side edge (2) in a manner such as to prevent air bubbles from being entrapped therebetween;

13

heating means (28) for the application of heat to the overlap between said folded one side edge (2) and said other side edge (5);

at least one means (29, 64) for applying molten plastics material (60, 65) to the tubular body (6); and means (30, 31) for smoothing the applied molten plastics material (60, 65).

8. An apparatus as claimed in claim 7, further comprising means (24) for applying adhesive to an additional film (9), and means for feeding the additional film (9) to the pair of rollers (26) for bonding to the laminated film (1).

9. An apparatus as claimed in claim 7 or 8, further comprising cutting means (74) for cutting the tubular body into lengths.

10. An apparatus as claimed in any of claims 7 to 9, further comprising deforming means for deforming the tubular body, when it is circular in section, to a tubular body (12) which is rectangular in section, which deforming means comprises a mandrel (81) having a rectangular section, heating means (79, 84) for heating the tubular body (12) so as to render it deformable, means (80) adapted to press against the tubular body (12) so as to deform it into approximately the sectional shape of the mandrel (81) and to locate the deformed tubular body (12) onto the mandrel (81), and means (90), on the mandrel (81), adapted to move outwardly so as to form the tubular body (12) into the desired shape.

11. An apparatus as claimed in any of claims 7 to 10, further comprising a cutting apparatus for cutting the tubular body (12) into desired lengths, which cutting apparatus comprises a rotable shaft (100) for supporting the tubular body (12), a plurality of circular blades (102), and means (103) for bringing each circular blade (102) into contact with the tubular body (12) supported upon the rotatable shaft (100).

12. An apparatus as claimed in any of claims 7 to 11, further comprising means for providing an open end of the tubular body (12) with a lid (13), which lid includes a peripheral ridge (14) having an internal wall (111) and an external wall (113), which means comprises heating means (116) for heating the peripheral ridge (14) of the lid (13) when fitted over said open end of the tubular body, and pressing means (112, 114, 126, 127, 136) for pressing the internal wall (111) and the external wall (113) of the peripheral ridge (14) against the tubular body (12).

**Patentansprüche**

1. Dose mit einem Rumpfteil, der (a) eine innere, den Inhalt schützende Schicht (A, C, E), die einen röhrenförmigen Körper (6) bildet, der aus einem Streifen hergestellt wurde und eine spiralförmige Naht (7) aufweist, und (b) eine äußere, verstärkende Schicht (9, 11a, 11b) aufweist, deren Oberfläche einer Behandlung zur Glättung unterworfen wurde, dadurch gekennzeichnet, daß der röhrenförmige Körper (6) ganz oder vorwiegend aus Kunststoffmaterial besteht und seine spiralförmige Naht (7) einen gefalteten Teil enthält, der gebildet wird, indem eine Seitenkante (2) eines Streifens einer Schichtfolie (1) zurück und nach außen auf eine äußere Oberfläche der den Inhalt schützenden Schicht gefaltet, der gefaltete Teil (2) verbunden wird, wobei verhindert wird, daß Luftblasen darunter eingeschlossen werden, die andere Seitenkante (5) derselben Schichtfolie (1) auf die gefaltete Oberfläche überlappt, und die Seitenkanten verbunden werden, wobei verhindert wird, daß Luftblasen zwischen den Seitenkanten (2, 5) eingeschlossen werden; und dadurch, daß es sich bei der äußeren verstärkenden Schicht um eine verstärkende Kunststoffschicht (9, 11a, 11b) handelt, die die äußere Oberfläche der den Inhalt schützenden Schicht bedeckt, wobei die verstärkende Kunststoffschicht (9, 11a, 11b) eine beschichtete Kunststoffschicht darstellt, die eine Dicke und Zusammensetzung aufweist, die ausreicht, dem röhrenförmigen Körper (6) Steifigkeit zu verleihen.

2. Dose gemäß Anspruch 1, bei der entweder das Verbinden der einen Seitenkante (2) mit der Schichtfolie (1) oder das Verbinden der anderen Seitenkante (5) mit der gefalteten Seitenkante (2), oder beide durch Schmelzbinden vorgenommen werden.

3. Dose gemäß Anspruch 1 oder 2, bei der die verstärkende Kunststoffschicht (9, 11a, 11b) (A) einen Film (9) über der äußeren Oberfläche des röhrenförmigen Körpers (6) mit Ausnahme der vorstehenden Naht (7), die durch Verbinden der gefalteten einen Seitenkante (2) mit der Schichtfolie (1) und durch Verbinden der anderen Seitenkante (5) mit der gefalteten einen Seitenkante (2) gebildet wurde, wobei die Dicke des zusätzlichen Films (9) ungefähr gleich der Höhe der vorstehenden Naht (7) ist; und (B) mindestens eine Kunststoffschicht (11a, 11b) aufweist, die über die äußere Oberfläche des zusätzlichen Films (9) und über die äußere Oberfläche der vorstehenden Naht (7) reicht.

4. Dose gemäß Anspruch 3, bei der entweder der Film (9) oder die mindestens eine Kunststoffschicht (11a, 11b), oder beide, pulverförmiges anorganisches Material enthalten.

5. Dose gemäß einem der Ansprüche 1 bis 4, bei der die Schichtfolie (1) mindestens eine äußere Schicht (E) aus einem Kunststoffmaterial, wie einem Polyolefin, eine innere Schicht (A) aus einem Kunststoffmaterial, wie einem Polyolefin und eine Zwischenschicht (C) aus einer Folie, wie z.B. Aluminiumfolie, aufweist.

6. Dose gemäß einem der Ansprüche 1 bis 5, die außerdem einen Deckel (13) auf einem offenen Ende des Rumpfteils umfaßt, wobei der Deckel (13) eine Randkante (14) mit einer inneren Wand (111) und einer äußeren Wand (113) aufweist.

7. Vorrichtung zur Herstellung des Rumpfteils einer Dose gemäß Anspruch 1, wobei die Vorrichtung umfaßt:

# 0 113 160

Einrichtungen (22) zum Nachaußen- und Zurückfalten auf sich selbst einer Seitenkante (2) einer Schichtfolie (1), wobei die Einrichtungen (22) Breiten-Regelteile (33), die die Breite der Schichtfolie (1) regeln, die von einer Rolle (21) abgerollt wird, wenn diese zwischen den Breiten-Regelteilen (33) hindurchläuft, und die nachfolgend die Faltung der einen Seitenkante (2) der Schichtfolie (1) bewirken und Begrenzungsteile (34), die dazu diennen, das Zurückfalten der gefalteten einen Seitenkante (2) auf die Schichtfolie (1) zu bewirken, durch die Tatsache, daß die Schichtfolie (1) oberhalb des einen Begrenzungsteils (34) und unterhalb eines anderen Begrenzungsteils (34) läuft;

Einrichtungen (26, 39) zum Verbinden der gefalteten einen Seitenkante (2) mit der Schichtfolie (1) derart, daß verhindert wird, daß Luftblasen dazwischen eingeschlossen werden, wobei die Einrichtungen (26, 39) ein Walzenpaar (26), zwischen denen die Schichtfolie (1) läuft, deren gefaltete eine Seitenkante (2) auf die Schichtfolie (1) zurückgefaltet ist, und Heizeinrichtungen (39) zur Anwendung von Wärme auf die gefaltete eine Seitenkante (2) umfassen;

Vorrichtungen (27) zum Überlappen der anderen Seitenkante (5) derselben Schichtfolie (1) mit der gefalteten einen Seitenkante (2), wobei die Vorrichtungen (27) einen fixierten Dorn (27), um den die Schichtfolie (1) spiralförmig gewickelt wird, Einrichtungen (57), die bewirken, daß die Schichtfolie (1) um den fixierten Dorn (27) rotiert und Einrichtungen (28) zum Verbinden der anderen Seitenkante (5) mit der gefalteten einen Seitenkante (2) derart, daß verhindert wird, daß Luftblasen daswischen eingeschlossen werden, aufweisen;

Heizeinrichtungen (28) zur Anwendung von Wärme auf die Überlappung zwischen der gefalteten einen Seitenkante (2) und der anderen Seitenkante (5);

mindestens eine Einrichtung (29, 64) zum Auftragen von geschmolzenem Kunststoffmaterial (60, 65) auf den röhrenförmigen Körper (6); und

Einrichtungen (30, 31) zum Glätten des aufgetragenen geschmolzenen Kunststoffmaterials (60, 65).

8. Vorrichtung gemäß Anspruch 7, die außerdem Einrichtungen (24) zum Auftragen eines Klebstoffs auf einen zusätzlichen Film (9) und Einrichtungen zum Eingeben des zusätzlichen Films (9) in das Walzenpaar (26) aufweist, um ihn mit der Schichtfolie (1) zu verbinden.

9. Vorrichtung gemäß Anspruch 7 oder 8, die außerdem Schneideeinrichtungen (74) zum Schneiden des röhrenförmigen Körpers in Längenabschnitte aufweist.

10. Vorrichtung gemäß einem der Ansprüche 7 bis 9, die außerdem Verformungseinrichtungen zum Verformen des röhenförmigen Körpers, wenn er einen kreisförmigen Querschnitt hat, in einen röhrenförmigen Körper (12) mit rechteckigem Querschnitt aufweist, wobei die Verformungseinrichtungen einen Dorn (81), der rechteckigen Querschnitt hat, Einrichtungen zum Erhitzen (79, 84) des röhrenförmigen Körpers (12), um ihn verformbar zu machen, Einrichtungen (80), darauf ausgerichtet, gegen den röhrenförmigen Körper (12) zu pressen, so daß er ungefähr zu der Querschnittsform des Dorns (81) verformt wird und darauf ausgerichtet, den verformten röhrenförmigen Körper (12) auf den Dorn (81) zu plazieren, und Einrichtungen (90) auf dem Dorn (81), darauf ausgerichtet, sich nach außen zu bewegen, um den röhrenförmigen Körper (12) in die gewünschte Form zu bringen, enthalten.

11. Vorrichtung gemäß einem der Ansprüche 7 bis 10, die außerdem eine Schneideapparatur zum Zerschneiden des röhrenförmigen Körpers (12) in die gewünschten Längen aufweist, wobei die Schneideapparatur einen drehbaren Stab (100) zum Halten des röhrenförmigen Körpers (12), eine Mehrzahl von kreisförmigen Klingen (102) und Einrichtungen (103) aufweist, die dazu dienen, jede kreisförmige Klinge mit dem röhrenförmigen Körper (12) in Kontakt zu bringen, der auf dem drehbaren Stab (100) gehalten wird.

12. Vorrichtung gemäß einem der Ansprüche 7 bis 11, die außerdem Einrichtungen zum Versehen eines offenen Endes des röhrenförmigen Körpers (12) mit einem Deckel (13) aufweist, wobei der Deckel eine Randkante (14) hat, die eine innere Wand (111) und eine äußere Wand (113) aufweist, und wobei die Einrichtung Heizeinrichtungen (116) zum Erhitzen der Randkante (14) des Deckels (131, wenn dieser auf dem offenen Ende des röhrenförmigen Körpers befestigt ist, und Preßeinrichtungen (112, 114, 126, 127, 136), um die innere Wand (111) und die äußere Wand (113) der Randkante (14) gegen den röhrenförmigen Körper (12) zu pressen, umfaßt.

**Revendications**

1. Boîte ayant un organe formant un corps, comprenant (a) une couche interne (A, C, E) de protection du contenu, formant un corps tubulaire (6) réalisé à partir d'une bande et ayant un raccord spiralé (7), et (b) une couche externe de support, la surface de la couche externe de support (9, 11, 11b) ayant subi un traitement de lissage, caractérisée en ce que le corps tubulaire (6) est formé en totalité ou principalement d'une matière plastique et son raccord spiralé (7) comprend une partie repliée formée par pliage vers l'arrière et vers l'extérieur, sur une surface externe de la couche de protection du contenu, d'un bord latéral (2) d'une bande de film stratifié (1), par collage de la partie repliée (2), avec empêchement du piégeage de bulles d'air au'dessous, par recouvrement de l'autre bord latéral (5) du même film stratifié (1) sur la surface pliée, et par liaison des bords latéraux avec empêchement du piégeage de bulles d'air entre les bords latéraux (2, 5), et en ce que la couche externe de support est une couche de matière plastique de support (9, 11a, 11b) recouvrant la surface externe de la couche de protection du contenu, la couche de matière

15

**0 113 160**

plastique de support (9, 11a, 11b) étant une couche de matière plastique revêtue dont l'épaisseur et la composition sont suffisantes pour qu'elles donnent de la rigidité au corps tubulaire (6).

2. Boîte selon la revendication 1, dans laquelle l'une au moins des opérations de liaison du premier bord latéral (2) et du film stratifié (1) et de liaison de l'autre bord latéral (5) et du premier bord latéral replié (2) est réalisée par liaison par fusion.

3. Boîte selon l'une des revendications 1 et 2, dans laquelle la couche de matière plastique de support (9, 11a, 11b) comporte (A) un film (9) placé sur la surface externe du corps tubulaire (6), sauf sur le raccord en saillie (7) formé par liaison du premier bord latéral replié (2) au film stratifié (1) et par liaison de l'autre bord latéral (7) et du premier bord latéral replié (2), l'épaisseur du film supplémentaire (9) étant approximativement égale à la hauteur du raccord en saillie (7), et (B) au moins une couche de matière plastique (11a, 11b) placée sur la surface externe du film supplémentaire (9) et sur la surface externe du raccord en saillie (7).

4. Boîte selon la revendication 3, dans laquelle l'un au moins du film (9) et de la couche de matière plastique au moins (11a, 11b) contient un matériau minéral en poudre.

5. Boîte selon l'une quelconque des revendications 1 à 4, dans laquelle le film stratifié (1) comporte au moins une couche extrene (E) d'une matière plastique telle qu'une polyoléfine, une couche interne (A) d'une matière plastique telle qu'une polyoléfine, et une couche intermédiaire (C) formée d'une feuille, par exemple d'aluminium.

6. Boîte selon l'une quelconque des revendications 1 à 5, comprenant en outre un couvercle (13) placé sur une extrémité ouverte de l'organe formant le corps, le couvercle (13) comprenant une nervure périphérique (15) ayant une paroi interne (111) et une paroi externe (113).

7. Appareil destiné à former l'organe constituant le corps d'une boîte selon la revendication 1, l'appareil comprenant:

un dispositif (22) destiné à replier un premier bord latéral (2) d'un film stratifié (1) vers l'extérieur et sur lui-même, ce dispositif (22) comprenant des organes (33) de réglage de largeur qui règlent la largeur du film stratifié (1) dévidé d'un rouleau (21) lors du passage entre les organes (33) de réglage de largeur et qui provoquent en conséquence le pliage du premier bord latéral (2) du film stratifié (1), et des organes (34) de délimitation destinés à provoquer le pliage du premier bord latéral plié (2) sur le film stratifié (1) étant donné que le film stratifié (1) passe au-dessus de l'un des organes de délimitation (34) et au-dessous de l'autre organe de délimitation (34),

un dispositif (26, 39) destiné à lier le premier bord latéral plié (2) et le film stratifié (1) de manière que des bulles d'air ne puissent par être piégées entre eux, ce dispositif (26, 39) comprenant deux rouleaux (26) entre lesquels passe le film stratifié (1) avec son premier bord latéral (2) qui est replié sur le film stratifié (1), et un dispositif de chauffage (39) destiné à appliquer de la chaleur au premier bord latéral replié (2),

un dispositif (27) de recouvrement du premier bord latéral replié (2) par l'autre bord latéral (5) du même film stratifié (1), ce dispositif (27) comprenant un mandrin fixe (27) autour duquel le film stratifié (1) est enroulé en spirale, un dispositif (57) destiné à provoquer l'entraînement en rotation du film stratifié (1) autour du mandrin fixe (27), et un dispositif (28) destiné à lier l'autre bord latéral (5) au premier bord latéral replié (2) d'une manière telle que les bulles d'air ne peuvent pas être piégées entre eux,

un dispositif (28) de chauffage destiné à appliquer de la chaleur à la partie de recouvrement du premier bord latéral replié (2) et de l'autre bord latéral (5),

au moins un dispositif (29, 64) destiné à appliquer une matière plastique fondue (60, 65) sur le corps tubulaire (6), et

un dispositif (30, 31) destiné à lisser la matière plastique fondue appliquée (60, 65).

8. Appareil selon la revendication 7, comprenant en outre un dispositif (24) d'application d'un adhésif sur un film supplémentaire (9), et un dispositif destiné à faire avancer le film supplémentaire (9) vers la paire de rouleaux (26) fin qu'il soit lié au film stratifié (1).

9. Appareil selon l'une des revendications 7 et 8, comprenant en outre un dispositif (74) de découpe du corps tubulaire en tronçons.

10. Appareil selon l'une quelconque des revendications 7 à 9, comprenant en outre un dispositif de déformation du corps tubulaire qui a une section circulaire afin qu'il forme un corps tubulaire (12) de section rectangulaire, ce dispositif de déformation comprenant un mandrin (81) de section rectangulaire, un dispositif (79, 84) de chauffage du corps tubulaire (12) afin qu'il soit déformable, un dispositif (80) destiné à appuyer contre le corps tubulaire (12) afin qu'il le déforme approximativement à la configuration en coupe du mandrin (81) et qu'il positionne le corps tubulaire déformé (12) sur le mandrin (81), et un dispositif (90) monté sur le mandrin (81) et destiné à se déplacer vers l'extérieur afin qu'il mette le corps tubulaire (12) à la configuration voulue.

11. Appareil selon l'une quelconque des revendications 7 à 10, comprenant en outre un appareil de découpe du corps tubulaire (12) en tronçons de longueur voulue, cet appareil de découpe comprenant un arbre rotatif (100) destiné à supporter le corps tubulaire (12), plusieurs lames circulaires (112) et un dispositif (103) destiné à mettre chaque lame circulaire (102) au contact du corps tubulaire (12) supporté sur l'arbre rotatif (100).

12. Appareil selon l'une quelconque des revendications 7 à 11, comprenant en outre un dispositif destiné à munir une extrémité ouverte du corps tubulaire (12) d'un couvercle (13), ce couvercle comprenant une nervure périphérique (14) ayant une paroi interne (11) et une paroi externe (113), ce dispositif

16

**0 113 160**

comprenant un dispositif (116) de chauffage de la nervure périphérique (14) du couvercle (13) lorsque celui-ci est monté sur l'extrémité ouverte du corps tubulaire, et un dispositif (112, 114, 126, 127, 136) de compression de la paroi interne (111) et de la paroi externe (113) de la nervure périphérique (14) contre le corps tubulaire (12).

17

Fig.1.

Fig.2.

Fig.3.

## Fig.4.

## Fig.5.

## Fig.6.

Fig.7.

Fig.8.

Fig.9.

*Fig:10.*

*Fig.11.*

0 113 160

## Fig. 12.

## Fig. 13.

**Fig. 14.**

**Fig. 15.**

Fig. 16.

Fig. 17.

**Fig. 18.**

**Fig. 19.**

Fig. 20.

Fig. 21.

0 113 160

Fig. 22.

Fig. 23(a).

Fig. 23(b).

Fig. 24.

Fig. 25.

Fig. 26.

0 113 160

Fig.27.

Fig.28.

Fig.29.

Fig.30.

Fig . 31.

Fig . 32.

Fig . 33.

Fig. 34.

116

115   114

14
113
113   110   111   112   13   111
120

Fig. 35.

114

112

119

120

117

12a

118

Fig. 36.

119   123

121

130

Fig. 38.

126   119   127

125

123   126

123   127

124   128

123

# Fig. 37.

# Fig. 39.

## Fig.40.

# Fig.41.